(19) Europäisches Patentamt
European Patent Office
Office européen des brevets

(11) EP 4 267 652 B1

(12) **EUROPEAN PATENT SPECIFICATION**

(45) Date of publication and mention of the grant of the patent:
**27.11.2024 Bulletin 2024/48**

(21) Application number: **20835677.4**

(22) Date of filing: **25.12.2020**

(51) International Patent Classification (IPC):
***C08G 65/40*** *(2006.01)* ***C08G 65/48*** *(2006.01)*
***C08G 73/12*** *(2006.01)*

(52) Cooperative Patent Classification (CPC):
**C08G 73/121; C08G 65/4012; C08G 65/485; C08G 73/124;** C08G 2650/40

(86) International application number:
**PCT/CN2020/139307**

(87) International publication number:
**WO 2022/133984 (30.06.2022 Gazette 2022/26)**

(54) **CURABLE COMPOUND PRODUCT**

HÄRTBARES VERBUNDPRODUKT

PRODUIT COMPOSÉ DURCISSABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.11.2023 Bulletin 2023/44**

(73) Proprietor: **Daicel Corporation**
**Osaka 530-0011 (JP)**

(72) Inventors:
- **OKANO, Yoshimichi**
  **Tokyo 108--8230 (JP)**
- **NAKATANI, Kouji**
  **Tokyo 108--8230 (JP)**
- **LIU, Feng**
  **Shanghai 200131 (CN)**

(74) Representative: **Grünecker Patent- und Rechtsanwälte**
**PartG mbB**
**Leopoldstraße 4**
**80802 München (DE)**

(56) References cited:
**WO-A1-2019/244694**
**JP-A- 2019 217 048**
**JP-A- 2019 218 659**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

TECHNICAL FIELD

The present disclosure relates to a curable compound product, and a molded product containing a cured product or semi-cured product of the curable compound product.

BACKGROUND ART

Engineering plastics are plastics having, for example, enhanced heat resistance and mechanical properties and are very useful as materials essential for miniaturization, weight reduction, performance enhancement and reliability enhancement of various types of parts. However, engineering plastics need to be heated at high temperatures during melt molding. Moreover, because of low solvent solubility of engineering plastics, it is difficult to subject them to solution casting. Therefore, it has been problematic that engineering plastics are not easy to mold.

For example, polyimides described in Patent Document 1 have excellent heat resistance and strength characteristics but are difficult to be dissolved or melted, and thus it has been difficult to use such polyimides as materials for molding such as melt-molding and solution casting or to use them as matrix resins for composite materials.

Patent Document 2 describes a curable compound represented by the following formula, and also describes that the compound can be melt-molded at low temperatures and also has solvent solubility, and thus it is possible to form a cured product having excellent moldability and superheat resistance.

[Chem. 5]

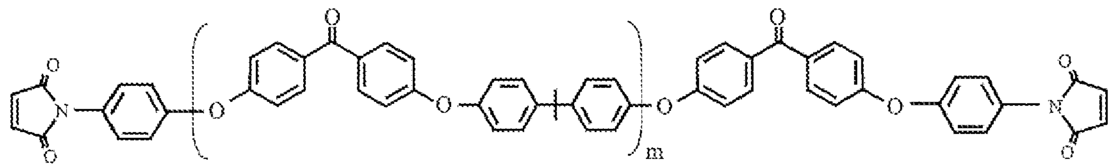

Citation List

Patent Document

Patent Document 1: JP 2000-219741 A
Patent Document 2: WO 2019/244694

SUMMARY OF INVENTION

Technical Problem

Furthermore, engineering plastics used as substrate materials for high-speed communication are required to have insulating properties. However, as a result of investigating the curable compound described in Patent Document 2, the present inventors have found that its insulating properties are insufficient. Also, the present inventors have found that its storage stability in solution is insufficient and that it may thicken over time. Furthermore, the present inventors have found that, when the curable compound product is subjected to film forming using a solution casting method, the prepared solution thickens during storage, making it difficult to form the product into a film shape.

An object of the present disclosure is to provide a curable compound product forming a cured product having excellent heat resistance and high insulating properties by performing heat treatment.

Another object of the present disclosure is to provide a curable compound product having excellent storage stability in solution, and forming a cured product having excellent heat resistance and high insulating properties by performing heat treatment.

Another object of the present disclosure is to provide a curable compound product having excellent moldability and storage stability in solution, and forming a cured product having excellent heat resistance and high insulating

properties by performing heat treatment.

Another object of the present disclosure is to provide a molded product containing a cured product having excellent heat resistance and high insulating properties or a semi-cured product thereof.

Another object of the present disclosure is to provide a laminate having a configuration in which a cured product having excellent heat resistance and high insulating properties or a semi-cured product thereof and a substrate are laminated.

Another object of the present disclosure is to provide a composite material including a cured product having excellent heat resistance and high insulating properties or a semi-cured product thereof and a fiber.

Another object of the present disclosure is to provide an adhesive, sealing agent or paint having excellent storage stability in solution and, when subjected to heat treatment, forming a cured product having excellent heat resistance and high insulating properties.

The "product", as used herein, means a form that is industrially produced and distributed to the market and does not mean a chemical entity itself. Accordingly, the "curable compound product" according to an embodiment of the present disclosure is a collective body in which a plurality of curable compounds are collected, and, in this sense, the "curable compound product" is a composition.

Solution to Problem

As a result of diligent research, the present inventors have found that a curable compound product containing a compound represented by Formula (1) below has the following properties.

1. Solvent solubility is excellent.
2. When the ring closure rate of the imide bonds is 97% or greater, storage stability in solution is significantly improved.
3. Melt formation at low temperatures is possible.
4. Melt viscosity is low.
5. Initiation temperature of heat generation is high.
6. Upon heating at a temperature equal to or higher than the initiation temperature of heat generation, a cured product having excellent heat resistance and high insulating properties can be obtained.

The present disclosure has been completed based on these findings.

That is, an embodiment of the present disclosure provides a curable compound product containing a compound represented by Formula (1):

[Chem. 1]

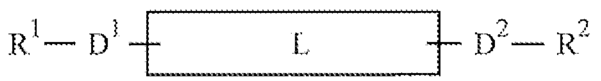

(1)

where $R^1$ and $R^2$ are identical or different, and each represent a group represented by Formula (r-1) or a group represented by Formula (r-2):

[Chem. 2]

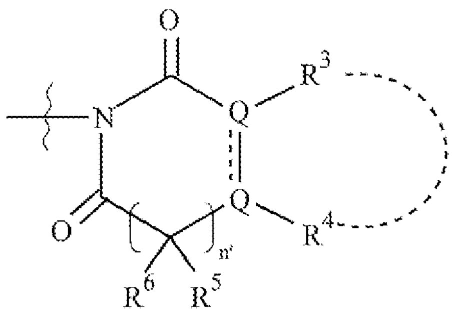

(r-1)

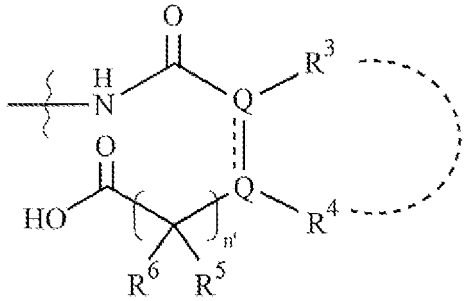

(r-2)

where Q represents C or CH, and two Q's in Formula (r-1) and Formula (r-2) bond to each other through a single bond or a double bond;

$R^3$ to $R^6$ are identical or different, and each represent a hydrogen atom or a hydrocarbon group;

$R^3$ and $R^4$ may bond to each other to form a ring;

n' represents an integer of 0 or greater, and

a bond with a wavy line is bonded to $D^1$ or $D^2$,

where $D^1$ and $D^2$ are identical or different, and each represent a single bond or a linking group; and

L represents a divalent group having a repeating unit containing a structure represented by Formula (I) and a structure represented by Formula (II):

[Chem. 3]

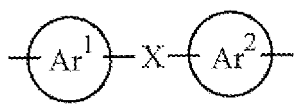

(I)

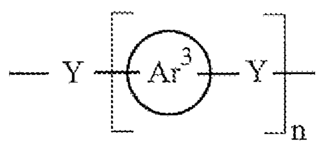

(II)

where $Ar^1$ to $Ar^3$ are identical or different, and each represent a group in which two hydrogen atoms are removed from an aromatic ring structure or a group in which two hydrogen atoms are removed from a structure in which two or more aromatic rings are bonded through a single bond or a linking group;

the aromatic rings may have an alkyl group;

X represents -CO-, -S-, or $-SO_2-$;

Y is identical or different, and each represents -S-, $-SO_2-$, -O-, -CO-, -COO-, or -CONH-; and

n represents an integer of 0 or greater,

provided that at least one of all $Ar^1$ to $Ar^3$ contained in L is a group in which two hydrogen atoms are removed from an aromatic ring structure having an alkyl group, and/or at least one of all $Ar^1$ to $Ar^3$ contained in L is a group in which two hydrogen atoms are removed from a structure in which two or more aromatic rings are bonded through a halogenated alkylene group,

wherein a proportion of the group represented by Formula (r-1) to a sum of the group represented by Formula (r-1) and the group represented by Formula (r-2) is 97% or greater.

An embodiment of the present disclosure also provides the curable compound product, wherein $D^1$ and $D^2$ in Formula (1) are identical or different, and each represent a group selected from groups having structures represented by Formulas (d-1) to (d-4):

[Chem. 4]

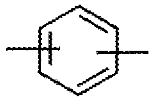

(d-1)

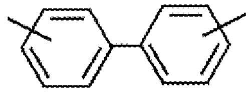

(d-2)

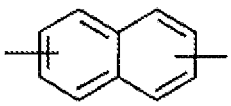

(d-3)

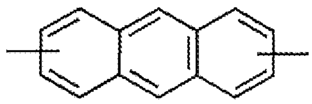

(d-4)

An embodiment of the present disclosure also provides the curable compound product, wherein a viscosity ($\eta_0$) of a 20 wt.% NMP solution obtained by subjecting the curable compound product to a reduced-pressure drying process and then dissolving the reduced-pressure-dried curable compound product in NMP and a viscosity ($\eta_{10}$) of the 20 wt.% NMP solution after being left to stand for 10 days in a desiccator maintained at 23°C satisfies Formula (F):

$$\eta_{10}/\eta_0 < 2 \qquad (F)$$

An embodiment of the present disclosure also provides the curable compound product which has a weight average molecular weight from 1000 to 10000 as calibrated with polystyrene standards.
An embodiment of the present disclosure also provides the curable compound product which has a glass transition temperature from 80 to 230°C.
An embodiment of the present disclosure also provides a molded product including a cured product or semi-cured product of the curable compound product.
An embodiment of the present disclosure also provides a laminate having a configuration in which a cured product or semi-cured product of the curable compound product and a substrate are laminated.
An embodiment of the present disclosure also provides a method of producing a laminate, the method including placing the curable compound product on a substrate and performing heat treatment to form a laminate having a configuration in which a cured product or semi-cured product of the curable compound product and the substrate are laminated.
An embodiment of the present disclosure also provides the method of producing a laminate, the method including applying a molten material of the curable compound product on a support made of plastic, solidifying the applied material, forming a thin film containing the curable compound product, releasing the formed thin film from the support, laminating the formed thin film on a substrate, and performing heat treatment.
An embodiment of the present disclosure also provides a composite material including a cured product or semi-cured product of the curable compound product and a fiber.
An embodiment of the present disclosure also provides an adhesive including the curable compound product.
An embodiment of the present disclosure also provides a paint including the curable compound product.
An embodiment of the present disclosure also provides a sealing agent including the curable compound product.

Advantageous Effects of Invention

The curable compound product according to an embodiment of the present disclosure has excellent solvent

solubility. Then, when the curable compound product is dissolved in a solvent, a solution having a viscosity suitable for film forming by a solution casting method can be obtained. Furthermore, the solution can suppress thickening over a long period of time, and can be stored while the viscosity is maintained.

Furthermore, the curable compound product can be melt-molded at low temperatures. The curable compound product has a low melt viscosity and a high initiation temperature of heat generation. Therefore, when the curable compound product is subjected to melt molding, the degree of freedom with respect to condition setting during molding is high. Furthermore, curing of the curable compound product during injection into a mold frame or the like can be prevented.

As described above, the curable compound product has excellent moldability, and a solution obtained by dissolving the curable compound product in a solvent has high storage stability. Furthermore, when the curable compound product is subjected to heat treatment at a temperature equal to or higher than the initiation temperature of heat generation, a cured product having excellent heat resistance and high insulating properties can be obtained.

Therefore, the curable compound product can be suitably used in an adhesive, a sealing agent, a paint, or the like in a field where superheat resistance is required (e.g., electronic information devices, home appliances, automobiles, precision machines, aircraft, devices for the space industry, etc.).

Brief Description of Drawing

FIG. 1 illustrates $^1$H-NMR measurement results of a compound product (1-2) obtained in an Example.
FIG. 2 illustrates $^1$H-NMR measurement results of a compound product (1-3) obtained in an Example.
FIG. 3 illustrates $^1$H-NMR measurement results of a compound product (1-4) obtained in an Example.
FIG. 4 illustrates $^1$H-NMR measurement results of a compound product (1-6) obtained in an Example.
FIG. 5 illustrates $^1$H-NMR measurement results of a compound product (1-9) obtained in a Comparative Example.
FIG. 6 illustrates DSC measurement results of compound products (1-1), (1-2), (1-3), and (1-7) obtained in Examples.

Description of Embodiments

[Curable compound product]

The curable compound product according to an embodiment of the present disclosure includes a compound represented by Formula (1) below:

[Chem. 6]

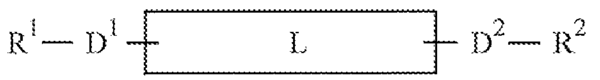

(1)

In Formula (1), $R^1$ and $R^2$ are identical or different, and each represent a group represented by Formula (r-1) below or a group represented by Formula (r-2) below:

[Chem. 7]

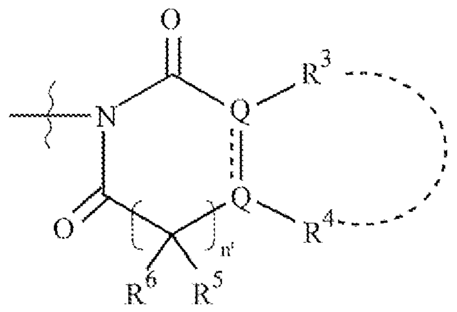

(r-1)

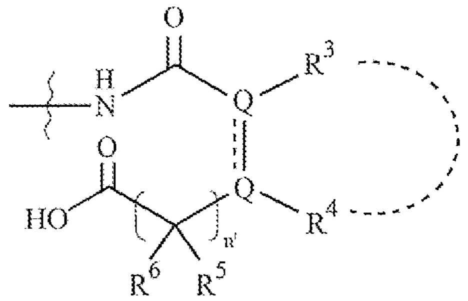

(r-2)

In Formula (r-1) or (r-2), Q represents C or CH. Two Q's in Formula (r-1) or (r-2) bond to each other through a single bond or a double bond. $R^3$ to $R^6$ are identical or different, and each represent a hydrogen atom or a hydrocarbon group. $R^3$ and $R^4$ may bond to each other to form a ring. n' represents an integer of 0 or greater. A bond with a wavy line in the formulas is bonded to $D^1$ or $D^2$.

$D^1$ and $D^2$ are identical or different, and each represent a single bond or a linking group. L represents a divalent group having a repeating unit containing a structure represented by Formula (I) below and a structure represented by Formula (II) below, provided that at least one of all $Ar^1$ to $Ar^3$ contained in L is a group in which two hydrogen atoms are removed from an aromatic ring structure having an alkyl group, and/or at least one of all $Ar^1$ to $Ar^3$ contained in L is a group in which two hydrogen atoms are removed from a structure in which two or more aromatic rings are bonded through a halogenated alkylene group.

[Chem. 8]

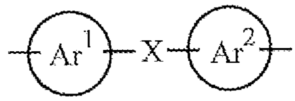

(I)

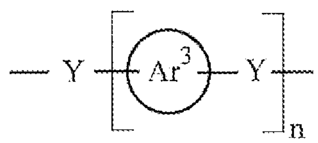

(II)

In Formulas (I) and (II), $Ar^1$ to $Ar^3$ are identical or different, and each represent a group in which two hydrogen atoms are removed from an aromatic ring structure or a group in which two hydrogen atoms are removed from a structure in which two or more aromatic rings are bonded through a single bond or a linking group. The aromatic ring may have an alkyl group. X represents -CO-, -S-, or $-SO_2-$, Y is identical or different, and each represents -S-, $-SO_2-$, -O-, -CO-, -COO-, or - CONH-. n represents an integer of 0 or greater.

In Formulas (r-1) and (r-2) above, Q represents C or CH. Two Q's in Formulas (r-1) and (r-2) bond to each other through a single bond or a double bond.

$R^3$ to $R^6$ are identical or different, and each represent a hydrogen atom, a saturated or unsaturated aliphatic hydrocarbon group (preferably an alkyl group having from 1 to 10 carbons, an alkenyl group having from 2 to 10 carbons, or an alkynyl group having from 2 to 10 carbons), an aromatic hydrocarbon group (preferably an aryl group having from 6 to 10 carbons, such as a phenyl group or a naphthyl group), or a group in which two or more groups selected from the group consisting of the saturated or unsaturated aliphatic hydrocarbon groups and aromatic hydrocarbon groups described above are bonded.

$R^3$ and $R^4$ may bond to each other to form a ring together with adjacent carbon atoms (Q in Formulas (r-1) and

(r-2)). Examples of the ring include alicyclic rings having from 3 to 20 carbons and aromatic rings having from 6 to 14 carbons. Examples of the alicyclic rings having from 3 to 20 carbons include approximately 3 to 20-membered (preferably 3 to 15-membered, particularly preferably 5 to 8-membered) cycloalkane rings, such as a cyclopropane ring, a cyclobutane ring, a cyclopentane ring, and a cyclohexane ring; approximately 3 to 20-membered (preferably 3 to 15-membered, particularly preferably 5 to 8-membered) cycloalkene rings, such as a cyclopentene ring and a cyclohexene ring; and crosslinked cyclic hydrocarbon groups, such as a perhydronaphthalene ring, a norbornane ring, a norbornene ring, an adamantane ring, a tricyclo[$5.2.1.0^{2,6}$]decane ring, and a tetracyclo[$4.4.0.1^{2,5}.1^{7,10}$]dodecane ring. The aromatic rings having from 6 to 14 carbons include a benzene ring and a naphthalene ring.

n' is an integer of 0 or greater, and is, for example, an integer from 0 to 3, and preferably 0 or 1.

The group represented by Formula (r-1) above is, in particular, preferably a group selected from groups represented by Formulas (r-1-1) to (r-1-6) below:

[Chem. 9]

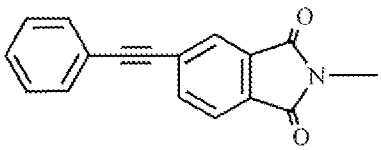

(r-1-1)

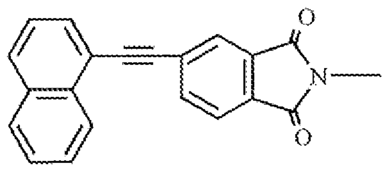

(r-1-2)

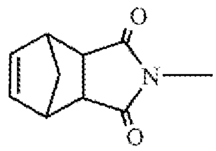

(r-1-3)

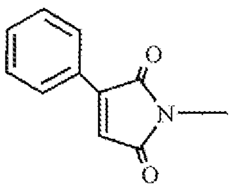

(r-1-4)

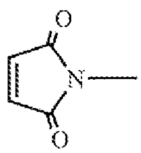

(r-1-5)

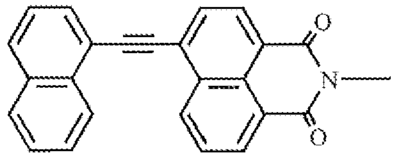

(r-1-6)

A bond from a nitrogen atom in each of the formulas bonds to $D^1$ or $D^2$ in Formula (1).

One or two or more substituents may bond to each of the groups represented by Formulas (r-1-1) to (r-1-6) above. Examples of the substituent include alkyl groups each having from 1 to 6 carbons, alkoxy groups each having from 1 to 6 carbons, and halogen atoms.

Examples of the alkyl group having from 1 to 6 carbons include straight-chain or branched-chain alkyl groups, such as a methyl group, an ethyl group, a propyl group, an isopropyl group, a butyl group, an isobutyl group, an s-butyl group, a t-butyl group, a pentyl group, and a hexyl group.

Examples of the alkoxy group having from 1 to 6 carbons include straight-chain or branched-chain alkoxy groups, such as a methoxy group, an ethoxy group, a butoxy group, and a t-butyloxy group.

Examples of the group represented by Formula (r-2) above include groups corresponding to the groups of Formulas (r-1-1) to (r-1-6) above, which are obtained by opening of the imide bonds in the groups of Formulas (r-1-1) to (r-1-6) above.

The group represented by Formula (r-1) above and the group represented by Formula (r-2) above are preferably a group represented by Formula (r-1') and a group represented by Formula (r-2'), respectively.

[Chem. 10]

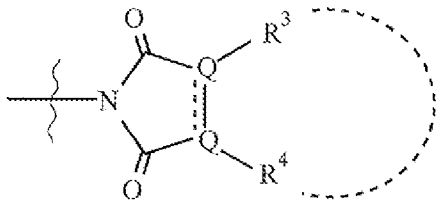

(r-1')

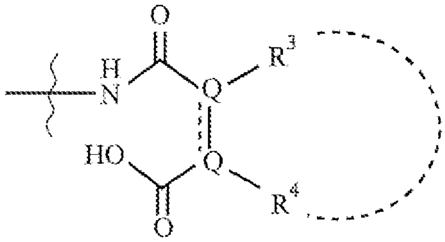

(r-2')

In Formulas (r-1') and (r-2'), Q, $R^3$, and $R^4$ are the same as described above. A bond with a wavy line in the formulas is bonded to $D^1$ or $D^2$.

The group represented by Formula (r-1) is particularly preferably a group selected from the groups represented by Formulas (r-1-1) to (r-1-5) above (that is, groups including imide bonds), and especially preferably a group represented by Formula (r-1-1) or (r-1-5) above.

The group represented by Formula (r-2) above is preferably a group corresponding to any of the groups represented by Formulas (r-1-1) to (r-1-5) above and obtained by opening of the imide bonds in the groups of Formulas (r-1-1) to (r-1-5) above (that is, group including an amic acid structure), and particularly preferably a group obtained by opening of the imide bonds in the group represented by Formula (r-1-1) or (r-1-5) above.

In Formula (1), $D^1$ and $D^2$ are identical or different, and each represent a single bond or a linking group. Examples of the linking group include divalent hydrocarbon groups, divalent heterocyclic groups, a carbonyl group, an ether bond, an ester bond, a carbonate bond, an amido bond, an imido bond, and groups made by linking a plurality of these.

The divalent hydrocarbon group includes a divalent aliphatic hydrocarbon group, a divalent alicyclic hydrocarbon group, and a divalent aromatic hydrocarbon group.

Examples of the divalent aliphatic hydrocarbon group include straight-chain or branched-chain alkylene groups each having from 1 to 18 carbons and straight-chain or branched-chain alkenylene groups each having from 2 to 18 carbons. Examples of the linear or branched alkylene group having from 1 to 18 carbons include a methylene group, a methyl methylene group, a dimethyl methylene group, an ethylene group, a propylene group, and a trimethylene group. Examples of the straight-chain or branched-chain alkenylene group having from 2 to 18 carbons include a vinylene group, a 1-methylvinylene group, a propenylene group, a 1-butenylene group, and a 2-butenylene group.

The divalent alicyclic hydrocarbon group include divalent alicyclic hydrocarbon groups each having from 3 to 18 carbons, and examples thereof include cycloalkylene groups (including cycloalkylidene groups), such as a 1,2-cyclopentylene group, a 1,3-cyclopentylene group, a cyclopentylidene group, a 1,2-cyclohexylene group, a 1,3-cyclohexylene group, a 1,4-cyclohexylene group, and a cyclohexylidene group.

Examples of the divalent aromatic hydrocarbon group include arylene groups each having from 6 to 14 carbons, and examples thereof include a 1,4-phenylene group, a 1,3-phenylene group, a 4,4'-biphenylene group, a 3,3'-biphenylene group, a 2,6-naphthalenediyl group, a 2,7-naphthalenediyl group, a 1,8-naphthalenediyl group, and an anthracenediyl group.

Heterocycles constituting the divalent heterocyclic groups include aromatic heterocycles and nonaromatic heterocycles. Examples of such a heterocycle include 3 to 10-membered rings (preferably 4 to 6-membered rings) having carbon atoms and at least one heteroatom (e.g., oxygen atom, sulfur atom, or nitrogen atom) as atoms constituting the ring, and condensed rings thereof. Specific examples thereof include heterocyclic rings containing an oxygen atom as a hetero atom (e.g., 3-membered rings, such as an oxirane ring; 4-membered rings, such as an oxetane ring; 5-membered rings, such as a furan ring, a tetrahydrofuran ring, an oxazole ring, an isoxazole ring, and a $\gamma$-butyrolactone ring; 6-membered rings, such as a 4-oxo-4H-pyran ring, a tetrahydropyran ring, and a morpholine ring; condensed rings, such as a benzofuran ring, an isobenzofuran ring, a 4-oxo-4H-chromene ring, a chroman ring, and an isochroman ring; crosslinked rings, such as a 3-oxatricyclo[4.3.1.$1^{4,8}$]undecan-2-one ring and a 3-oxatricyclo[4.2.1.$0^{4,8}$]nonan-2-one ring),

heterocyclic rings containing a sulfur atom as a hetero atom (e.g., 5-membered rings, such as a thiophene ring, a thiazole ring, an isothiazole ring, and a thiadiazole ring; and 6-membered rings, such as a 4-oxo-4H-thiopyran ring; condensed rings, such as a benzothiophene ring), and heterocyclic rings containing a nitrogen atom as a hetero atom (e.g., 5-membered rings, such as a pyrrole ring, a pyrrolidine ring, a pyrazole ring, an imidazole ring, and a triazole ring; 6-membered rings, such as an isocyanuric ring, a pyridine ring, a pyridazine ring, a pyrimidine ring, a pyrazine ring, a piperidine ring, and a piperazine ring; condensed rings, such as an indole ring, an indoline ring, a quinoline ring, an acridine ring, a naphthyridine ring, a quinazoline ring, and a purine ring). The divalent heterocyclic group is a group in which two hydrogen atoms are removed from the heterocyclic ring structure described above.

$D^1$ and $D^2$ described above are especially preferably groups including a divalent aromatic hydrocarbon group, from the perspective of forming a cured product having outstanding heat resistance. The divalent aromatic hydrocarbon group is preferably a divalent aromatic hydrocarbon group having from 6 to 14 carbons, more preferably a group selected from groups represented by Formulas (d-1) to (d-4) below, particularly preferably a group represented by Formula (d-1) below (1,2-phenylene group, 1,3-phenylene group, or 1,4-phenylene group), and most preferably 1,4-phenylene group.

[Chem. 11]

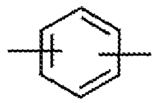
(d-1)

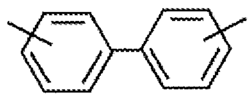
(d-2)

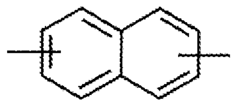
(d-3)

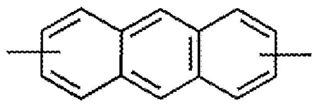
(d-4)

Furthermore, $D^1$ and $D^2$ described above is preferably a group in which, together with the divalent aromatic hydrocarbon group, at least one group selected from the group consisting of a carbonyl group, an ether bond, an ester bond, a carbonate bond, an amido bond, and an imido bond is linked, and especially preferably a group in which an ether bond is linked to the divalent aromatic hydrocarbon group described above.

Thus, the $R^1$-$D^1$- moiety and the $R^2$-$D^2$- moiety in Formula (1) are, for example, identical or different and are each a group selected from groups represented by Formulas (rd-1'-1) to (rd-2'-2) below, and particularly preferably a group represented by Formula (rd-1'-2) or (rd-2'-2) below:

[Chem. 12]

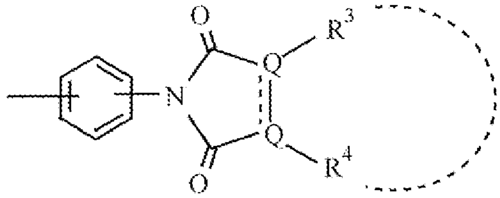

(rd-1'-1)

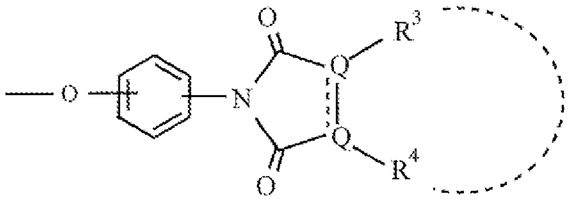

(rd-1'-2)

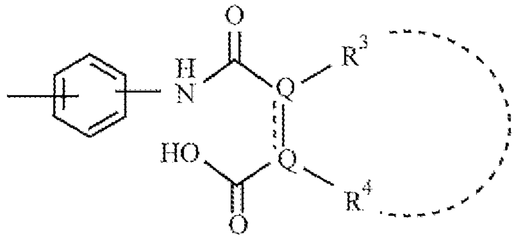

(rd-2'-1)

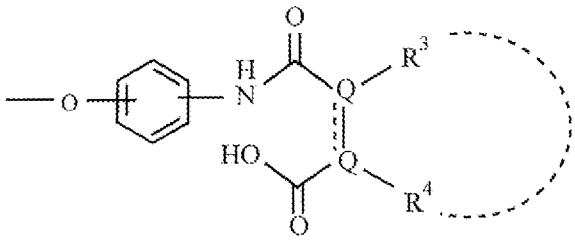

(rd-2'-2)

In Formulas (rd-1'-1) to (rd-2'-2), Q, $R^3$, and $R^4$ are the same as described above.

L in Formula (1) represents a divalent group having a repeating unit containing a structure represented by Formula (I) above and a structure represented by Formula (II) above.

In Formula (I) and Formula (II), $Ar^1$ to $Ar^3$ are identical or different, and each represent a group in which two hydrogen atoms are removed from an aromatic ring structure or a group in which two hydrogen atoms are removed from a structure in which two or more aromatic rings are bonded through a single bond or a linking group. The aromatic ring may have an alkyl group as a substituent.

L in Formula (1) is provided with at least one of the following conditions 1 and 2.

Condition 1: At least one of all $Ar^1$ to $Ar^3$ contained in L is a group in which two hydrogen atoms are removed from an aromatic ring structure having an alkyl group.

Condition 2: At least one of all $Ar^1$ to $Ar^3$ contained in L is a group in which two hydrogen atoms are removed from a structure in which two or more aromatic rings are bonded through a halogenated alkylene group.

n in Formula (II) represents an integer of 0 or greater and is, for example, an integer from 0 to 5, preferably an integer from 1 to 5, and particularly preferably an integer from 1 to 3.

Examples of the aromatic ring (= aromatic hydrocarbon ring) include aromatic rings having from 6 to 14 carbons, such as benzene, naphthalene, anthracene, and phenanthrene. Among these, an aromatic ring having from 6 to 10 carbons, such as benzene or naphthalene, is preferred.

Examples of the alkyl group that may be contained in the aromatic ring include alkyl groups having from 1 to 6 carbons. From the perspective of forming a cured product having high insulating properties, the alkyl group described above is preferably a secondary alkyl group having from 3 to 6 carbons (that is, an alkyl group having a tertiary carbon atom) or a tertiary alkyl group having from 4 to 6 carbons (that is, an alkyl group having a quaternary carbon atom), and especially preferably a tertiary alkyl group having from 4 to 6 carbons (that is, an alkyl group having a quaternary carbon atom). Examples of the tertiary alkyl group having from 4 to 6 carbons include a t-butyl group, a t-pentyl group, and a t-hexyl group.

The number of alkyl groups contained in the aromatic ring is, for example, from 1 to 4, preferably from 2 to 4, and particularly preferably from 2 to 3.

Examples of the linking group include divalent hydrocarbon groups having from 1 to 5 carbons and groups in which one or more hydrogen atoms of a divalent hydrocarbon group having from 1 to 5 carbons is substituted with halogen atom(s).

Examples of the divalent hydrocarbon groups having from 1 to 5 carbons include straight-chain or branched-chain alkylene groups having from 1 to 5 carbons, such as a methylene group, a methylmethylene group, a dimethylmethylene group, a dimethylene group, and a trimethylene group; straight-chain or branched-chain alkenylene groups having from 2 to 5 carbons, such as a vinylene group, 1-methylvinylene group, and a propenylene group; and straight-chain or branched-chain alkynylene groups having from 2 to 5 carbons, such as an ethynylene group, a propynylene group, and 1-methylpropynylene group. Among these, a straight-chain or branched-chain alkylene group having from 1 to 5 carbons is preferred, and a branched-chain alkylene group having from 1 to 5 carbons is particularly preferred.

The group in which one or more hydrogen atoms of the hydrocarbon group is substituted with halogen atom(s) is preferably a halogenated alkylene group having from 1 to 5 carbons, such as a bis(trifluoromethyl)methylene group.

$Ar^1$ to $Ar^3$ described above are identical or different and are each preferably a group selected from the groups represented by Formulas (a-1) to (a-5) below: The aromatic ring in the formulas below may have an alkyl group as a substituent. Note that, in the following formulas, positions of bonding are not particularly limited.

[Chem. 13]

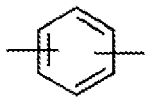

(a-1)

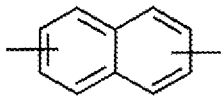

(a-2)

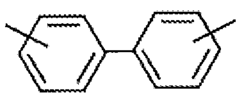

(a-3)

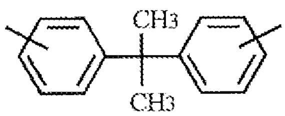

(a-4)

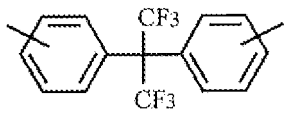

(a-5)

$Ar^1$ and $Ar^2$ in Formula (I) is, in particular, preferably a group represented by Formula (a-1) or (a-2), and especially preferably a group represented by Formula (a-1) above.

X is, in particular, preferably -CO-.

Therefore, the structure represented by Formula (I) is preferably a structure represented by Formula (I') below:

[Chem. 14]

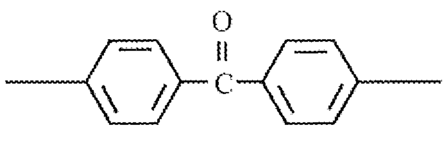

(I')

The structure represented by Formula (I) preferably contains a structure derived from benzophenone.

A proportion of the structural unit derived from benzophenone in the total amount of the compound represented by Formula (1) is, for example, 5 wt.% or greater, preferably from 10 to 62 wt.%, and particularly preferably from 15 to 60 wt.%.

At least one of all $Ar^3$ contained in Formula (I) is a group represented by Formula (a-1) or (a-3) above, in which the aromatic ring in the formula has an alkyl group (preferably a secondary or tertiary alkyl group), or a group represented by Formula (a-5) above, particularly preferably a group represented by Formula (a-1) above, in which the aromatic ring in the formula is a group having an alkyl group (preferably a secondary or tertiary alkyl group), or a group represented by Formula (a-5) above.

$Ar^3$ described above may have a combination of the group represented by Formula (a-1) or (a-3) above, in which the aromatic ring in the formula is a group having an alkyl group (preferably a secondary or tertiary alkyl group) and the group represented by Formula (a-4) or (a-5) above.

Y is, in particular, preferably -S-, $-SO_2-$, -O-, or -CO-, particularly preferably - O- or -S-, and especially preferably -O-.

Therefore, from the perspective of forming a cured product having excellent insulating properties, at least one structure selected from Formulas (II'-1) to (II'-11) below is preferably contained, and at least one structure selected from Formulas (II'-6) to (II'-9) below is particularly preferably contained, as the structure represented by Formula (II). In the following formula, a bond with a wavy line is bonded with the structure represented by Formula (I).

[Chem. 15]

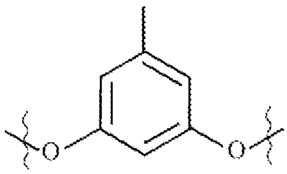

(II'-1)

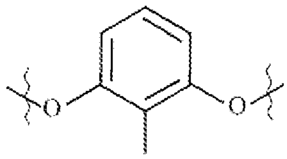

(II'-2)

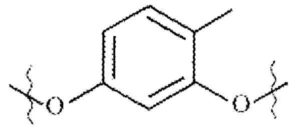

(II'-3)

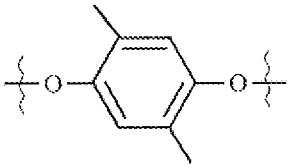

(II'-4)

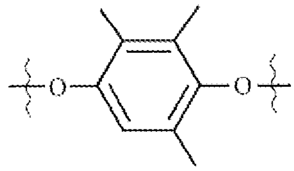

(II'-5)

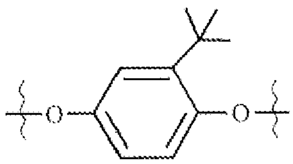

(II'-6)

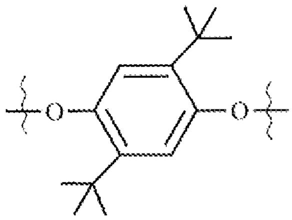

(II'-7)

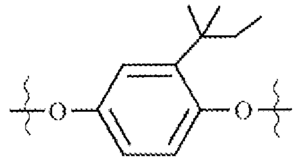

(II'-8)

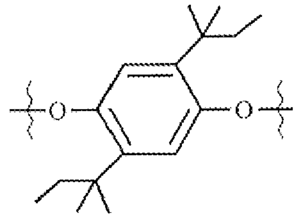

(II'-9)

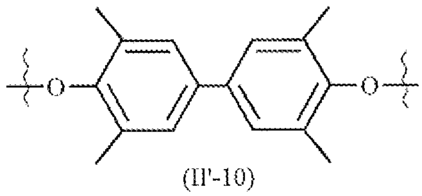

(II'-10)

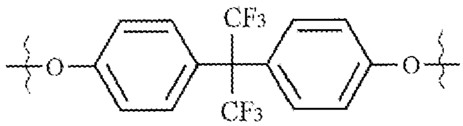

(II'-11)

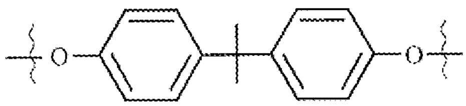

(II'-12)

The structure represented by Formula (II) may include, in combination, at least one selected from the structures represented by Formulas (II’-1) to (II’-10) above and the structure represented by Formula (II’-11) above or the structure represented by Formula (II’-12) above.

In the case where the structure represented by Formula (II) includes, in combination, the two types of structures as described above, when one of the structures is at least one structure selected from Formulas (II’-6) to (II’-9) above, the other structure may be either the structure represented by Formula (II’-11) above or the structure represented by Formula (II’-12) above.

In the case where the structure represented by Formula (II) includes two types of structures as described above, when one of the structures is at least one structure selected from Formulas (II’-4), (II’-5), and (II’-10), the other structure is preferably the structure represented by Formula (II’-11) above, from the perspective of forming a cured product with excellent insulating properties.

A proportion of the structural unit represented by Formula (II) above in the total amount of the compound represented by Formula (1) is, for example, 5 wt.% or greater, preferably from 10 to 55 wt.%, and particularly preferably from 15 to 53 wt.%.

L in Formula (1) is, in particular, preferably a divalent group represented by Formula (L-1) below from the perspective of forming a cured product having outstanding heat resistance.

[Chem. 16]

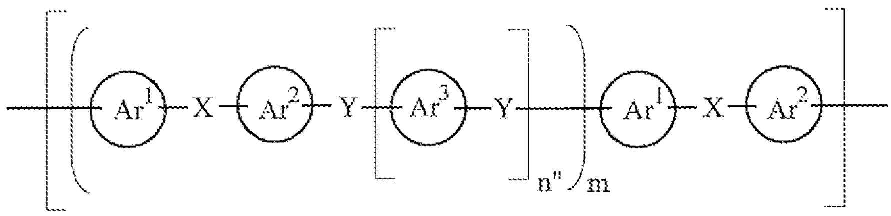

(L-1)

In Formula (L-1) above, m is a number of repeating unit shown in round brackets included in the molecular chain (= divalent group represented by Formula (L-1) above), that is, the average degree of polymerization, and is, for example, from 2 to 50, preferably from 3 to 40, more preferably from 4 to 30, particularly preferably from 5 to 20, and most preferably from 5 to 10. In the case where m is less than the range, the strength and heat resistance of the resulting cured product tend to be insufficient. On the other hand, in the case where m is greater than the range, the glass transition temperature tends to be high. In addition, the solvent solubility tends to decrease. Furthermore, the melt viscosity of the curable compound product (that is, viscosity when the curable compound product is melted) and the solution viscosity of the curable compound product (that is, viscosity of a solution obtained by dissolving the curable compound product in a solvent) is too high, and the moldability tends to decrease. Note that the value of m can be determined by GPC measurement or spectrum analysis of NMR. Furthermore, n" in Formula (L-1) above represents an integer of 0 or greater. $Ar^1$ to $Ar^3$, X, and Y are the same as described above. A plurality of $Ar^1$ moieties in Formula (L-1) above represent identical groups. The same applies for $Ar^2$ and $Ar^3$.

L in Formula (1) is, in particular, preferably a divalent group represented by Formula (L-1-1) below. $Ar^3$ in the following formula is the same as described above. The group represented by [-O-$Ar^3$-O-] in the following formula preferably includes at least one structure selected from Formulas (II'-1) to (II'-11) above.

[Chem. 17]

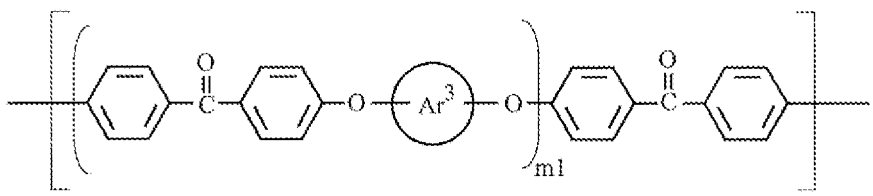

(L-1-1)

In the above formula, m 1 is the number of repeating units shown in round brackets included in the molecular chain represented by Formula (L-1-1) above, that is, the average degree of polymerization, and is, for example, from 2 to 50, preferably from 3 to 40, more preferably from 4 to 30, particularly preferably from 5 to 20, most preferably from 5 to 10, and especially preferably 5 or greater and less than 10. Note that the value of m1 can be determined by GPC measurement or spectrum analysis of NMR.

When m1 described above is less than the range described above, the resulting cured product tends to be brittle and to be deteriorated in mechanical characteristics. Furthermore, when m1 described above is greater than the range described above, the moldability tends to decrease due to, for example, deterioration in solvent solubility and increase in melt viscosity.

A proportion of the amount of the compound represented by Formula (1) above in the total amount of the curable compound product is, for example, 80 wt.% or greater, preferably 90 wt.% or greater, more preferably 95 wt.% or greater, particularly preferably 98 wt.% or greater, most preferably 99 wt.% or greater, and especially preferably 99.5 wt.% or greater. Note that the upper limit is 100 wt.%.

In the compound represented by Formula (1) below contained in the curable compound product, a proportion of the group represented by Formula (r-1) above to the sum of the group represented by Formula (r-1) above and the group represented by Formula (r-2) above (a proportion expressed by the following equation, hereinafter, sometimes referred to as "ring closure rate") is 97% or greater. In addition, the curable compound product has excellent storage stability in a solvent.

ring closure rate= [number of moles of group represented by Formula (r-1) above/(number of moles of the group represented by Formula (r-1) above + number of moles of group represented by Formula (r-2) above)] × 100

The ring closure rate of the curable compound product is preferably 98% or greater, particularly preferably 98.5% or greater, and most preferably 99% or greater.

Note that the number of moles of each group can be determined by calculation from the peak area corresponding to each group in the $^1$H-NMR spectrum.

Furthermore, the number of moles of the group represented by Formula (r-1) per g of the curable compound product (hereinafter, sometimes referred to as "functional group concentration") is, for example, from $0.5 \times 10^{-4}$ to $20 \times 10^{-4}$ mol/g. The upper limit of the functional group concentration is preferably $15 \times 10^{-4}$ mol/g, most preferably $10 \times 10^{-4}$ mol/g. The lower limit of the functional group concentration is preferably $1.0 \times 10^{-4}$ mol/g, most preferably $1.5 \times 10^{-4}$ mol/g. When the functional group concentration of the curable compound product falls within the range described above, a cured product having excellent solvent solubility and excellent toughness and heat resistance can be formed. On the other hand, when the functional group concentration is less than the range described above, the solvent solubility tends to decrease. Further, when the functional group concentration is greater than the range described above, a cured product with excellent toughness tends to be hardly obtained.

The functional group concentration is obtained by determining the area of each peak from the $^1$H-NMR spectrum of the curable compound product and substituting the determined value into the following equation:

functional group concentration = [peak area of group represented by Formula (r-1)/number of protons in group represented by Formula (r-1)]/Σ[(each peak area/number of protons in group to which each peak is assigned) × chemical formula weight corresponding to each peak]

Furthermore, the number of moles (hereinafter, sometimes referred to as "unclosed ring concentration") of the group represented by Formula (r-2) above (that is, group including an amic acid structure) per g of the curable compound product is, for example, $0.15 \times 10^{-4}$ mol/g or less, and preferably $0.10 \times 10^{-4}$ mol/g or less.

The unclosed ring concentration is obtained by determining the area of each peak from the $^1$H-NMR spectrum of the curable compound product and substituting the determined value into the following equation:

unclosed ring concentration = (peak area of group represented by Formula (r-2)/number of protons in group represented by Formula (r-2))/Σ[(each peak area/number of protons in group to which each peak is assigned) × chemical formula weight corresponding to each peak]

A number average molecular weight (Mn) of the curable compound product is, for example, from 1000 to 15000. The lower limit of the number average molecular weight (Mn) is preferably 1500, further preferably 2000, particularly preferably 2200, most preferably 2600, and especially preferably 2700. The upper limit of the number average molecular weight (Mn) is preferably 12000, more preferably 10000, further preferably 7000, still further preferably 5000, particularly preferably 4000, and especially preferably 3600.

The weight average molecular weight (Mw; as calibrated with polystyrene standards) of the curable compound product is, for example, from 1000 to 15000. The lower limit of the weight average molecular weight (Mw) is preferably 2000, further preferably 2500, particularly preferably 3000, and most preferably 4000. The upper limit of the weight average molecular weight (Mw) is preferably 10000, more preferably 9000, further preferably 8000, particularly preferably 7500, most preferably 7000, and especially preferably 6500.

A proportion of the structure derived from an aromatic ring in the total amount of the curable compound product is 50 wt.% or greater, preferably 60 wt.% or greater, and particularly preferably 65 wt.% or greater. Note that the upper limit of the proportion of the structure derived from an aromatic ring is, for example, 95 wt.%. Therefore, the curable compound product has a high solvent solubility and a low melt viscosity, and a cured product thereof has a high thermal stability. A proportion of the structure derived from an aromatic ring less than the range described above tends to reduce thermal stability of the cured product. On the other hand, a proportion of the structure derived from an aromatic ring greater than the range described above tends to reduce solvent solubility, increase melt viscosity, and reduce moldability.

The nitrogen atom content of the curable compound product is, for example, from 0.1 to 2.8 wt.%, preferably from 0.2 to 2.5 wt.%, more preferably from 0.25 to 2.0 wt.%, and particularly preferably from 0.3 to 1.8 wt.%. The nitrogen atom content can be determined by CHN elemental analysis. The curable compound product having a nitrogen atom content in the range described above achieves excellent solvent solubility and can form a cured product having excellent toughness and heat resistance. Meanwhile, when the nitrogen atom content is less than the range described above,

formation of a cured product having excellent toughness and heat resistance tends to be difficult. Furthermore, when the nitrogen atom content is greater than the range described above, solvent solubility tends to decrease.

The curable compound product has the molecular weight described above and thus has a high solubility in a solvent, and when dissolved in a solvent, can provide a solution having a viscosity suitable for solution casting. Furthermore, it has a low melt viscosity and can be melt-molded easily. Furthermore, the obtained cured product (or molded body after curing) exhibits high toughness. A number average molecular weight less than the range described above tends to reduce toughness of the resulting cured product, and thus it embrittles and is easily broken when stamped or easily causes cracks during drying. In addition, when it is subjected to melt press molding, the resin tends to easily leak from the mold. On the other hand, a number average molecular weight greater than the range described above tends to reduce solvent solubility or increase melt viscosity excessively, thereby impairing moldability. Note that Mn and Mw are determined by gel permeation chromatography (GPC) measurement (solvent: chloroform; as calibrated with polystyrene standards).

The solubility of the curable compound product in a solvent is 1 g or greater, preferably 5 g or greater, and particularly preferably 10 g or greater, per 100 g of the solvent at 23°C. When the solution obtained by dissolving the curable compound product in a solvent is formed into a film shape by a casting method and cured, a film-shaped cured product can be formed.

Examples of the solvent include chain ketones, such as methyl ethyl ketone and methyl isobutyl ketone; cyclic ketones, such as cyclohexanone and cycloheptanone; amides, such as formamide, acetamide, N-methyl-2-pyrrolidone (NMP), N,N-dimethylformamide, and N,N-dimethylacetamide; halogenated hydrocarbons, such as methylene chloride, chloroform, 1,2-dichloroethane, chlorobenzene, bromobenzene, dichlorobenzene, benzotrifluoride, and hexafluoro-2-propanol; sulfoxides, such as dimethylsulfoxide (DMSO), diethyl sulfoxide, and benzyl phenyl sulfoxide; tetrahydrofuran (THF); aromatic hydrocarbons, such as benzene, toluene, and xylene; and liquid mixtures of two or more types of these. The curable compound product exhibits excellent solubility, in particular, in at least one type of solvent selected from ether, chain ketones, cyclic ketones, amides, halogenated hydrocarbons, and sulfoxides.

Furthermore, a 20 wt.% NMP solution obtained by subjecting the curable compound product to a reduced-pressure drying process and then dissolving it in NMP has a low viscosity and is suitable for solution casting. The viscosity ($\eta_0$) of the 20 wt.% NMP solution is from 5 to 1000 mPa s, for example. The lower limit of the viscosity ($\eta_0$) is preferably 10 mPa·s, and particularly preferably 15 mPa·s. The upper limit of the viscosity ($\eta_0$) is preferably 700 mPa s, more preferably 500 mPa s, further preferably 300 mPa s, further preferably 200 mPa s, further preferably 150 mPa s, further preferably 100 mPa·s, particularly preferably 70 mPa·s, most preferably 50 mPa·s, and especially preferably 40 mPa·s. If the viscosity ($\eta_0$) is too low, it is difficult to mold a thick film, and if the viscosity is too high, molding failure such as thickness unevenness tends to be easily caused.

The curable compound product has excellent storage stability in solution, and the viscosity ($\eta_{10}$) of a 20 wt.% NMP solution after being left to stand for 10 days in a desiccator maintained at 23°C is from 10 to 2000 mPa s, for example, the 20 wt.% NMP solution being obtained by subjecting the curable compound product to a reduced-pressure drying process and then dissolving the reduced-pressure-dried curable compound product in NMP. The lower limit of the viscosity ($\eta_{10}$) is preferably 20 mPa·s, particularly preferably 30 mPa s, and most preferably 40 mPa·s. The upper limit of the viscosity ($\eta_{10}$) is preferably 1400 mPa s, more preferably 1000 mPa s, further preferably 600 mPa·s, particularly preferably 400 mPa·s, most preferably 300 mPa s, and especially preferably 200 mPa s.

Furthermore, the viscosity ($\eta_0$) and the viscosity ($\eta_{10}$) preferably satisfy Formula (F) below:

$$\eta_{10}/\eta_0 < 2 \qquad (F)$$

The viscosity ($\eta_0$) and the viscosity ($\eta_{10}$) more preferably satisfy Formula (F-1) below, and particularly preferably satisfies Formula (F-2) below:

$$\eta_{10}/\eta_0 < 1.75 \qquad (F\text{-}1)$$

$$\eta_{10}/\eta_0 < 1.5 \qquad (F\text{-}2)$$

The viscosity ($\eta_0$) and the viscosity ($\eta_{10}$) preferably satisfy Formula (F-3) below:

$$1 \leq \eta_{10}/\eta_0 < 2 \qquad (F\text{-}3)$$

Note that the viscosity of the NMP solution is a viscosity at ambient temperature (for example, 23°C) and normal pressure, and can be measured using an E-type viscometer. Furthermore, the reduced-pressure drying process of the curable compound product is performed until the amount of residual moisture in the curable compound product is 0.05% or less.

A 5% weight loss temperature ($T_{d5}$) of the curable compound product measured at a rate of temperature increase of 20°C/min (in nitrogen) is 300°C or higher, preferably 400°C or higher, particularly preferably 450°C or higher, and most preferably 470°C or higher. The upper limit of the 5% weight loss temperature ($T_{d5}$) is, for example, 600°C, preferably 550°C, and particularly preferably 530°C.

A 10% weight loss temperature ($T_{d10}$) of the curable compound product measured at a rate of temperature increase of 20°C/min (in nitrogen) is, for example, 410°C or higher, preferably 460°C or higher, particularly preferably 480°C or higher, and most preferably 500°C or higher. The upper limit of the 10% weight loss temperature ($T_{d10}$) is, for example, 600°C, and preferably 550°C.

The 5% weight loss temperature and the 10% weight loss temperature are determined by thermogravimetric (TGA) measurements using TG/DTA (differential thermal and thermal gravimetric measuring instrument).

The glass transition temperature (Tg) of the curable compound product is, for example, from 80 to 230°C. The upper limit of the glass transition temperature (Tg) is preferably 220°C, particularly preferably 200°C, and most preferably 185°C. The lower limit of the glass transition temperature (Tg) is preferably 90°C, and particularly preferably 100°C. Note that Tg can be determined by differential scanning calorimetry (DSC).

The curable compound product has a low glass transition temperature (Tg), and thus has excellent moldability due to melting. When the glass transition temperature (Tg) is greater than the range described above, heating at a high temperature is required during melting, and thus moldability is deteriorated, and for example, in a case where a composite material is produced by impregnating fibers with the curable compound product in a molten state, it may be difficult to impregnate fine fibers due to progress of a curing reaction of the curable compound product.

The initiation temperature of heat generation of the curable compound product is, for example, 220°C or higher, preferably 230°C or higher, more preferably 240°C or higher, and particularly preferably 250°C or higher. In addition, the upper limit of the initiation temperature of heat generation is, for example, 300°C. Note that the initiation temperature of heat generation can be measured using DSC at a rate of temperature increase of 20°C/min (in nitrogen).

When the curable compound product is heated at a temperature equal to or higher than the initiation temperature of heat generation, the product can rapidly cure to form a cured product having a highly crosslinked structure and having excellent superheat resistance. Furthermore, because the curing reaction does not proceed at a temperature below the initiation temperature of heat generation, for example, when molding is performed, the injection of the curable compound product into the mold frame is performed at a temperature lower than the initiation temperature of heat generation, thereby making it possible to inject the curable compound product while suppressing thickening thereof, and to achieve a stable injection operation and molding with high precision.

Note that heating may be performed while the temperature is maintained constant or may be performed by changing the temperature stepwise. The heating temperature can be appropriately adjusted depending on the heating time and, for example, in the case where shortening of the heating time is desired, the heating temperature is preferably set high. Because the curable compound product has a high proportion of the structure derived from an aromatic ring, a cured product (specifically, a cured product having excellent heat resistance) can be formed without causing decomposition even when heating is performed at a high temperature, and a cured product can be efficiently formed with superior working efficiency by heating at a higher temperature and in a shorter period of time. Furthermore, the heating means is not particularly limited, and a known means can be used.

Furthermore, when heating at a temperature equal to or higher than the initiation temperature of heat generation is difficult, a polymerization initiator such as a radical polymerization initiator may be added to the curable compound product in an amount of approximately from 0.05 to 10.0 parts by weight per 100 parts by weight of the curable compound product. As a result, the cured product can be formed at a lower temperature than the heat generation temperature.

Curing of the curable compound product can be performed under normal pressure, under reduced pressure, or under pressurization.

When the heating temperature and heating time of the curable compound product are adjusted to stop curing reaction in the middle of the reaction without completing the reaction, a semi-cured product (B-stage) can be formed. The degree of cure of the semi-cured product is, for example, 85% or less (e.g., from 10 to 85%, particularly preferably from 15 to 75%, and even more preferably from 20 to 70%).

Note that the degree of cure of the semi-cured product can be calculated from the following equation by measuring the calorific value of the curable compound product and the calorific value of the semi-cured product thereof by DSC.

$$\text{Degree of cure (\%)} = [1 - (\text{calorific value of semi-cured product}/\text{calorific value of curable compound product})] \times 100$$

The semi-cured product of the curable compound product temporarily exhibits fluidity by heating and can conform to a step having a height difference. Furthermore, by further heating, a cured product having excellent heat resistance can be formed.

The glass transition temperature (Tg) of the cured product of the curable compound product is, for example, from 160 to 250°C. The upper limit of the glass transition temperature is preferably 230°C, more preferably 220°C, and particularly preferably 210°C. Furthermore, the lower limit of the glass transition temperature is preferably 165°C, and particularly preferably 170°C. Note that Tg can be measured by a DSC method.

A 5% weight loss temperature ($T_{d5}$) of the cured product of the curable compound product measured at a rate of temperature increase of 20°C/min (in nitrogen) is 300°C or higher, preferably 400°C or higher, particularly preferably 450°C or higher, and most preferably 500°C or higher. The upper limit of the 5% weight loss temperature ($T_{d5}$) is, for example, 600°C, preferably 550°C, and particularly preferably 530°C.

A 10% weight loss temperature ($T_{d10}$) of the cured product of the curable compound product measured at a rate of temperature increase of 20°C/min (in nitrogen) is, for example, 300°C or higher, preferably 400°C or higher, particularly preferably 480°C or higher, and most preferably 500°C or higher. The upper limit of the 10% weight loss temperature ($T_{d10}$) is, for example, 600°C, and preferably 550°C.

The cured product of the curable compound product has excellent insulating properties, and the relative permittivity and the value of the dielectric loss tangent are within the following ranges.

The relative permittivity ($\varepsilon r$) is, for example, 2.55 or less, preferably 2.50 or less, and particularly preferably 2.45 or less at a frequency of 10 GHz. The lower limit of the dielectric constant is, for example, 2.20.

The dielectric loss tangent (tan $\delta$) is, for example, 0.0045 or less (for example, from 0.0001 to 0.0045) at a frequency of 10 GHz.

Note that the "relative permittivity" and "dielectric loss tangent" described above are values measured at a frequency of 10 GHz and a measurement temperature of 23°C in conformity with ASTM D2520 (cavity resonance perturbation method).

The elastic modulus (according to JIS K7161 compliant method) of the cured product of the curable compound product is, for example, 1000 MPa or greater (preferably 1150 MPa or greater, and particularly preferably 1200 MPa or greater).

The yield stress (according to JIS K7161 compliant method) of the cured product of the curable compound product is, for example, 70 MPa or greater (preferably 80 MPa or greater).

The elongation at breaking point (according to JIS K7161 compliant method) of the cured product of the curable compound product is, for example, 10% or greater.

Because the curable compound product has the characteristics described above, for example, the curable compound product can be used as molding materials for composite materials to be used in a severe environmental temperature, such as those for electronic information devices, home appliances, automobiles, and precision machines, and as functional materials, such as insulating materials and heat-resistant adhesives. Besides, the curable compound product can be suitably used for sealing agents, paints, adhesives, inks, sealants, resists, and forming materials [forming materials for, for example, substrates, electrical insulation materials (such as electrical insulation films), laminated plates, composite materials (such as fiber-reinforced plastics and prepregs), optical elements (such as lenses), optical shaping materials, electronic papers, touch panels, solar cell substrates, optical waveguide materials, light guide plates, and holographic memories].

Because the curable compound product has the characteristics described above, the curable compound product can be particularly suitably used as a sealing agent that covers a semiconductor element in a highly heat-resistant and highly voltage-resistant semiconductor device (such as power semiconductor), for which employment of a known resin material has been difficult.

Furthermore, because the curable compound product has the characteristics described above, the curable compound product can be suitably used as an adhesive [e.g., heat-resistant adhesive used for laminating a semiconductor in a highly heat-resistant and highly voltage-resistant semiconductor device (such as power semiconductor)].

Furthermore, because the curable compound product has the characteristics described above, the curable compound product can be suitably used as a paint (solvent coating agent or powder coating agent) [e.g., paint (solvent coating agent or powder coating agent) used for a highly heat-resistant and highly voltage-resistant semiconductor device (such as power semiconductor)].

[Method of producing curable compound product]

The curable compound product can be produced by reacting a compound represented by Formula (2) below:

[Chem. 18]

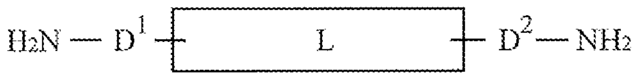 (2)

wherein $D^1$ and $D^2$ are identical or different, and each represent a single bond or a linking group; L represents a divalent group having a repeating unit containing a structure represented by Formula (I) below and a structure represented by Formula (II) below:

[Chem. 19]

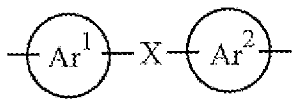 (I)

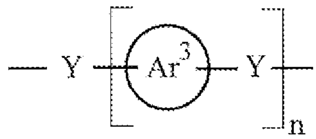 (II)

wherein $Ar^1$ to $Ar^3$ are identical or different, and each represent a group in which two hydrogen atoms are removed from an aromatic ring structure or a group in which two hydrogen atoms are removed from a structure in which two or more aromatic rings are bonded through a single bond or a linking group, the aromatic ring may have an alkyl group, X represents -CO-, -S-, or $-SO_2-$, Y is identical or different, and each represents -S-, $-SO_2-$, -O-, -CO-, -COO-, or -CONH-, and n represents an integer of 0 or greater, provided that at least one of all $Ar^1$ to $Ar^3$ contained in L is a group in which two hydrogen atoms are removed from an aromatic ring structure having an alkyl group, and/or at least one of all $Ar^1$ to $Ar^3$ contained in L is a group in which two hydrogen atoms are removed from a structure in which two or more aromatic rings are bonded through a halogenated alkylene group,
with a compound represented by Formula (3) below:

[Chem. 20]

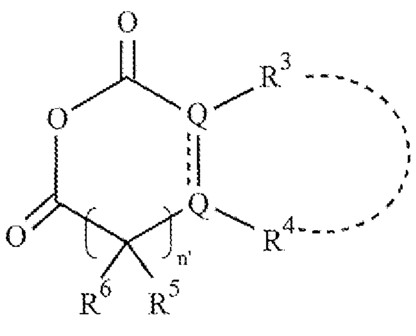 (3)

wherein Q represents C or CH, Two Q's in Formula (3) bond to each other through a single bond or a double bond. $R^3$ to $R^6$ are identical or different, and each represent a hydrogen atom or a hydrocarbon group, $R^3$ and $R^4$ may bond to each other to form a ring, and n' represents an integer of 0 or greater.

When the compound represented by Formula (2) is reacted with the compound represented by Formula (3), the curable compound product is obtained via a two-step reaction as shown by the following scheme. Note that the $D^1$ substituent side of the compound represented by Formula (2) is shown in the following scheme, but the same reaction proceeds on the $D^2$ substituent side. $L^1$, $D^1$, Q, $R^3$ to $R^6$, and n' in the following scheme are the same as described above.

[Chem. 21]

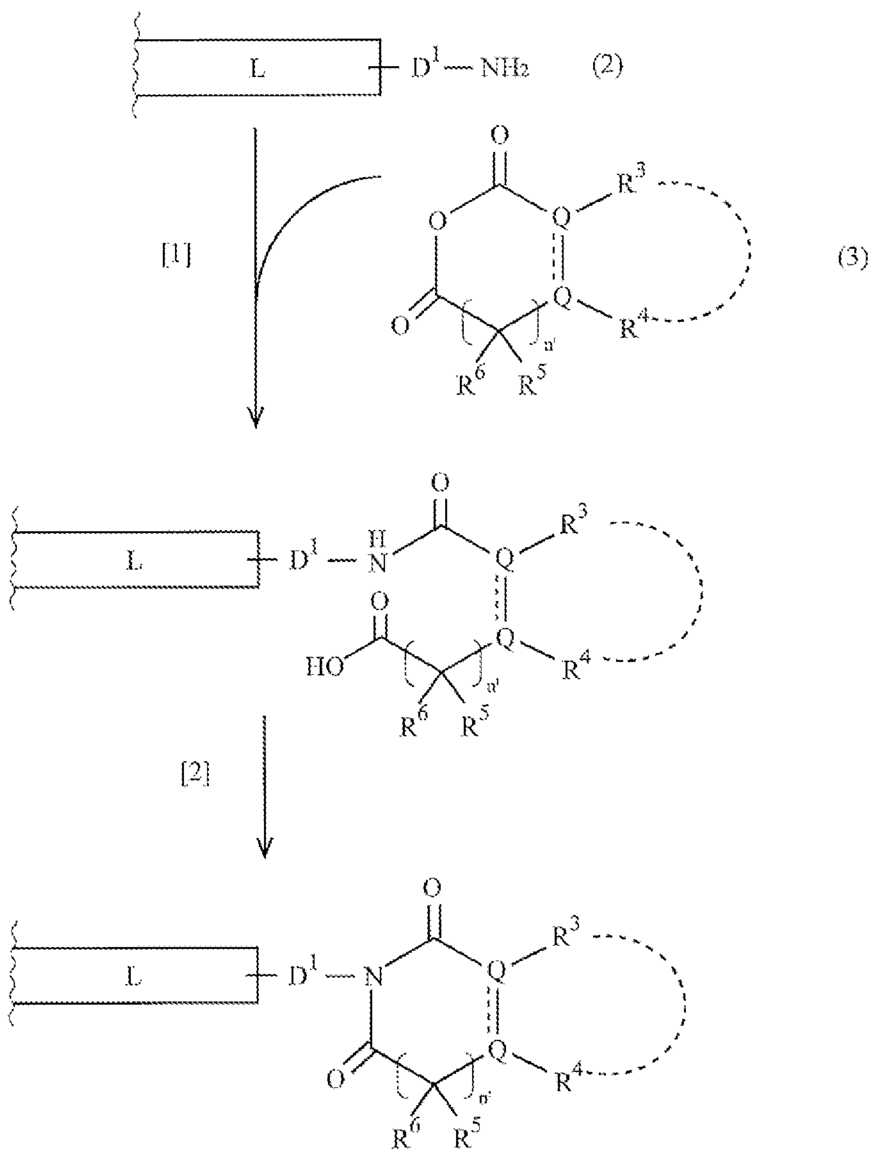

This reaction can be performed in the presence of a solvent. Examples of the solvent include N,N-dimethylformamide, N,N-dimethylacetamide, and N-methyl-2-pyrrolidone. One of these solvents can be used alone or two or more in combination.

<First stage>

The reaction at the first stage is a reaction in which the compound represented by Formula (3) reacts with an $NH_2$ group, which is a terminal group of the compound represented by Formula (2), and the terminal group is converted to a group represented by Formula (r-2). This reaction provides a compound represented by Formula (1) in which $R^1$ and $R^2$ are groups represented by Formula (r-2).

The used amount of the compound represented by Formula (3) is, for example, approximately from 2.0 to 4.0 mol per mol of the compound represented by Formula (2).

This reaction can be performed at room temperature (from 1 to 40°C). The reaction time is, for example, approximately from 1 to 30 hours. In addition, this reaction can be performed by any method, such as a batch method, a semi-batch method, and a continuous method.

Furthermore, as a raw material for the compound represented by Formula (2), the compound represented by Formula (3) or the like, a material having a low alkali metal content is preferably selected and used because a curable compound product having an alkali metal content not greater than 500 ppm by weight (preferably not greater than 100 ppm by weight, particularly preferably not greater than 50 ppm by weight, and most preferably not greater than 35 ppm by weight) can be obtained. The curable compound product having an alkali metal content reduced to the range described

above can form a cured product having excellent heat resistance.

<Second stage; ring closing reaction>

The reaction at the second stage is a reaction in which the group represented by Formula (r-2) as the terminal group is converted to a group represented by Formula (r-1) through a ring closing reaction. This reaction provides a compound represented by Formula (1) in which at least either $R^1$ or $R^2$ is a group represented by Formula (r-1).

The reaction can proceed by heating at a temperature of 200°C or higher or by addition of a catalyst.

Among these, the addition of a catalyst is preferable in that the ring closing reaction can proceed while the progress of the curing reaction is suppressed, and a curable compound product having a high ring closure rate and excellent storage stability in solution is obtained. As the catalyst, a base catalyst, an acid catalyst, or the like can be used. Among these, it is desirable to advance the reaction using an acid catalyst as the catalyst in that side reactions are suppressed and a curable compound product in which contamination of a side reaction product is suppressed can be produced.

Examples of the base catalyst include amine compounds and sodium acetate. One of these solvents can be used alone or two or more in combination.

Examples of the acid catalyst include inorganic acids such as hydrochloric acid, hydrogen bromide, hydrogen iodide, sulfuric acid, sulfuric anhydride, nitric acid, phosphoric acid, phosphorous acid, phosphorous tungstic acid, and phosphorous molybdic acid; sulfonic acids such as methanesulfonic acid, ethanesulfonic acid, trifluoromethanesulfonic acid, benzenesulfonic acid, and p-toluenesulfonic acid; carboxylic acids such as acetic acid and oxalic acid; halogenated carboxylic acids such as chloroacetic acid, dichloroacetic acid, trichloroacetic acid, fluoroacetic acid, difluoroacetic acid, and trifluoroacetic acid; solid acids such as silica, alumina, and activated clay; and cationic ion exchange resins. One of these acidic catalysts can be used alone or two or more in combination. Among these, at least one type selected from p-toluenesulfonic acid, methanesulfonic acid, sulfuric acid, and phosphoric acid is preferably used as the acid catalyst.

The used amount of the base catalyst is, for example, from 0.02 to 1.0 mol, preferably from 0.02 to 0.5 mol, and particularly preferably from 0.05 to 0.4 mol, per mol of the compound represented by Formula (3).

The used amount of the acid catalyst is, for example, from 0.02 to 1.0 mol, preferably from 0.05 to 0.5 mol, and particularly preferably from 0.1 to 0.4 mol, per mol of the compound represented by Formula (3).

The catalyst concentration in the reaction system is, for example, from 0.003 to 0.10 mmol/g, preferably from 0.005 to 0.07 mmol/g, and particularly preferably from 0.007 to 0.04 mmol/g. When the used amount of the catalyst falls below the range described above, the ring closure rate of the curable compound product tends to decrease, and the storage stability in solution tends to decrease as the ring closure rate decreases.

In addition, in the reaction described above, quick removal of byproduct water generated by the reaction to the outside of the reaction system is preferable in order to further promote the progress of the ring closing reaction. Examples of the method of removing byproduct water include a method of using a dehydrating agent such as a carboxylic acid anhydride and a method of using a solvent that azeotropes with water. In these cases, the byproduct water removal efficiency may vary depending on the shape and space volume of the reaction vessel, the piping layout, and the thermal insulation state.

However, when dehydration is performed using a carboxylic acid acetic anhydride, a side reaction proceeds while the ring closing reaction proceeds, and a large amount of side reaction products are produced. For example, when the reaction between the compound represented by Formula (2) and maleic acid anhydride is performed while dehydration is performed using acetic anhydride, side reaction products represented by Formulas (I-a) and (I-b) below are produced together with the compound represented by Formula (I) below, which is the target compound. Furthermore, when such side reaction products are mixed into the curable compound product, the initiation temperature of heat generation tends to decrease. Therefore, when dehydration is performed using a carboxylic acid anhydride, it is preferable to suppress the progress of the side reaction by adjusting the used amount of raw material, the method of supplying the raw material, and the supply rate thereof, and to sufficiently purify the product. In the following formulas, $D^1$, $D^2$, and L are the same as described above.

[Chem. 22]

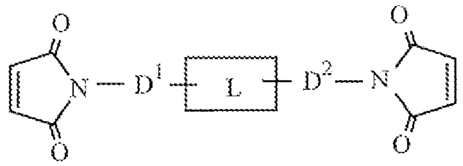

(I)

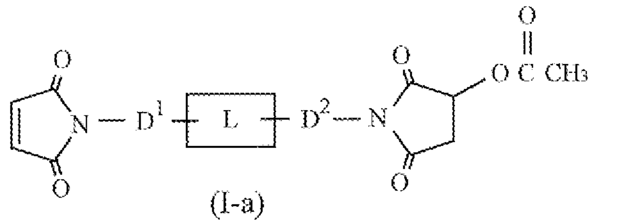

(I-a)

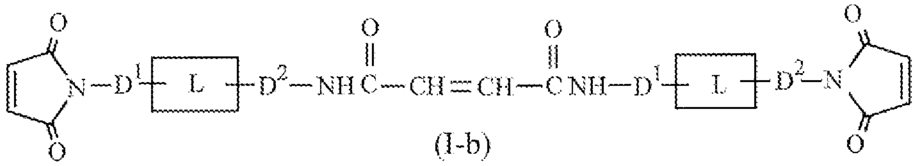

(I-b)

When an acid catalyst is used, the water produced by the ring closing reaction is preferably removed by an azeotropic reaction. Examples of azeotropic agents that can be used include benzene, toluene, xylene, and ethylbenzene.

It is preferable that the ratio (former/latter; weight ratio) of the used amount of the azeotropic agent to the used amount of the solvent is, for example, in the range from 25/75 to 45/55, because it is possible to promote the progress of the reaction, and the effect of improving the ring closure rate of the curable compound product can be obtained.

The reaction is preferably stopped after confirming that the reaction has progressed sufficiently by a method such as sampling to confirm the ring closure rate.

After completion of this reaction, the resulting reaction product can be separated and purified by typical precipitation, washing, and filtration.

(Preparation of compound represented by Formula (2))

Of the compounds represented by Formula (2) above used as the raw materials for the curable compound product, a compound represented by Formula (2-1) below, for example, can be produced via the following steps [1-1] and [1-2].

Step [1-1]: A compound represented by Formula (4) below and a compound represented by Formula (5) below are allowed to react in the presence of a base to form a compound represented by Formula (6) below.

Step [1-2]: An aminoalcohol (a compound represented by Formula (7) below) is allowed to react with the compound represented by Formula (6) below:

[Chem. 23]

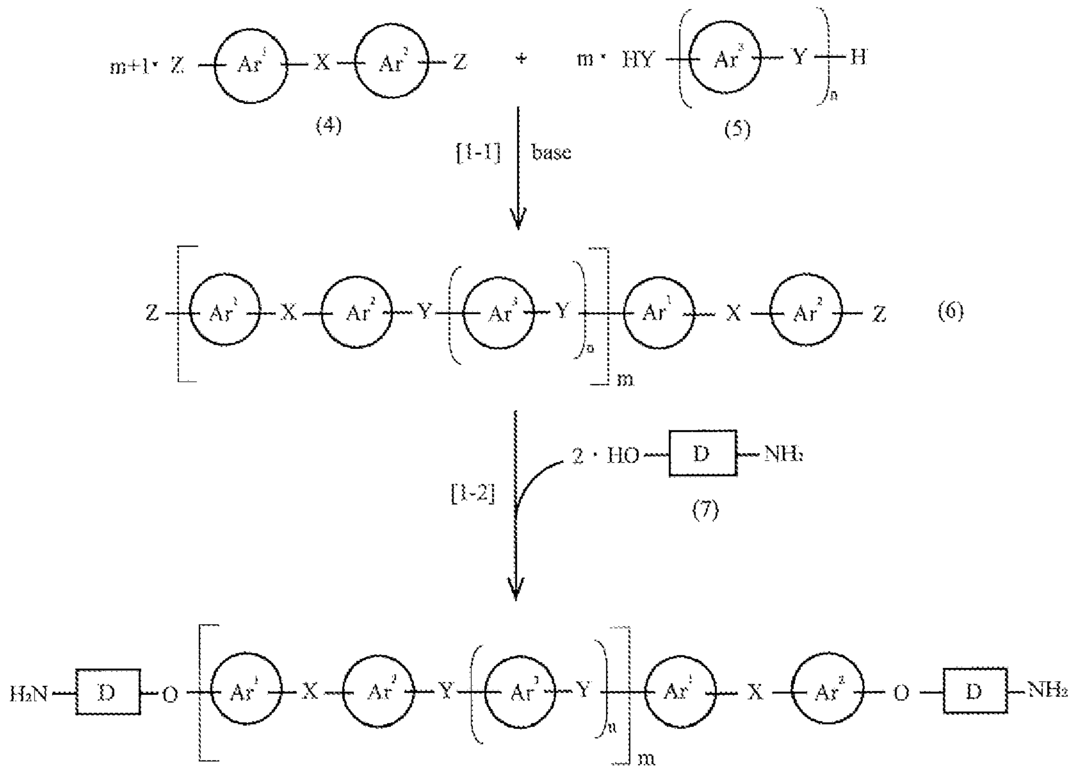


(2-1)

In the above formulas, $Ar^1$ to $Ar^3$, X, Y, and n are identical to those described above. D represents a linking group, and examples of the linking group include the same groups that are exemplified for the linking group in $D^1$ and $D^2$. m is the average degree of polymerization of the repeating unit and is, for example, from 3 to 50, preferably from 4 to 30, and particularly preferably from 5 to 20. Z represents a halogen atom.

(Step [1-1])

Examples of the compound represented by Formula (4) above include halides of benzophenone and derivatives thereof.

Examples of the compound represented by Formula (5) above include hydroquinone, resorcinol, catechol, 2,6-naphthalenediol, 2,7-naphthalenediol, 1,5-naphthalenediol, 4,4'-dihydroxybiphenyl, 2,5-dihydroxybiphenyl, 4,4'-dihydroxydiphenyl ether, 4,4'-dihydroxybenzophenone, 4,4'-dihydroxydiphenyl sulfide, 4,4'-dihydroxydiphenyl sulfone, bisphenol A (BisA), bisphenol F, bisphenol S, 4,4'-bis(trifluoromethyl)methylenebisphenol (BisAF), and derivatives thereof. One of these solvents can be used alone or two or more in combination.

Examples of the derivatives include compounds in which a substituent is bonded to an aromatic hydrocarbon group of the compound represented by Formula (4) above or the compound represented by Formula (5). Examples of the substituent include alkyl groups each having from 1 to 6 carbons, alkoxy groups each having from 1 to 6 carbons, and halogen atoms. Among these, a secondary alkyl group having from 3 to 6 carbons or a tertiary alkyl group having from 4 to 6 carbons is preferable as the alkyl group.

The used amount of the compound represented by Formula (4) is desirably adjusted in a range of 1 mole or greater, based on the average degree of polymerization of the molecular chain in the desired compound represented by Formula (6), in a range of 1 mole or greater, per mol of the compound represented by Formula (5). For example, per mol of the compound represented by Formula (5), approximately 1.2 mol (e.g., from 1.19 to 1.21 mol) of the compound represented by Formula (4) is preferably used in the case of the average degree of polymerization of 5, approximately 1.1 mol (e.g., from 1.09 to 1.11 mol) of the compound represented by Formula (4) is preferably used in the case of the average degree of polymerization of 10, and approximately 1.05 mol (e.g., from 1.04 to 1.06 mol) of the compound represented by Formula (4) is preferably used in the case of the average degree of polymerization of 20.

The reaction of step [1-1] is performed in the presence of a base (e.g., at least one selected from the group consisting of inorganic bases, such as sodium hydroxide, potassium hydroxide, calcium hydroxide, sodium carbonate, potassium carbonate, and sodium hydrogencarbonate, and organic bases, such as pyridine and triethylamine). The

used amount of the base can be appropriately adjusted based on the type of the base. For example, the used amount of diacidic base, such as calcium hydroxide, is approximately from 1.0 to 2.0 mol per mol of the compound represented by Formula (5).

Furthermore, the reaction of step [1-1] can be performed in the presence of a solvent. As the solvent, for example, an organic solvent, such as N-methyl-2-pyrrolidone, N,N-dimethylformamide or dimethyl sulfoxide, or a solvent mixture of two or more thereof can be used.

The used amount of the solvent is, for example, approximately from 5 to 20 times in weight relative to the total amount (weight) of the compound represented by Formula (4) and the compound represented by Formula (5). When the solvent is used in an amount greater than the range described above, the reaction rate tends to decrease.

The reaction atmosphere in step [1-1] is not particularly limited as long as it does not inhibit the reaction. For example, a nitrogen atmosphere, an argon atmosphere, or any other atmosphere may be used.

The reaction temperature in step [1-1] is, for example, approximately from 100 to 200°C. The reaction time is, for example, approximately from 3 to 24 hours. In addition, this reaction can be performed by any method, such as a batch method, a semi-batch method, and a continuous method.

After completion of this reaction, the resulting reaction product can be separated and purified by typical precipitation, washing, and filtration.

(Step [1-2])

Examples of the compound represented by Formula (7) above include 4-aminophenol, 2-amino-6-hydroxynaphthalene, and regioisomers and derivatives thereof. One of these compounds can be used alone or two or more in combination.

The used amount of the compound represented by Formula (7) above can be appropriately adjusted based on the average degree of polymerization of the molecular chain in the desired compound represented by Formula (2-1). For example, the amount may be adjusted to a range approximately from 0.4 to 0.6 mol per mol of the compound represented by Formula (5) in the case of the average degree of polymerization of 5, approximately from 0.2 to 0.4 mol per mol of the compound represented by Formula (5) in the case of the average degree of polymerization of 10, and approximately from 0.1 to 0.15 mol per mol of the compound represented by Formula (5) in the case of the average degree of polymerization of 20.

The reaction in step [1-2] is preferably carried out in the presence of a base. Examples of the base include inorganic bases, such as sodium hydroxide, potassium hydroxide, calcium hydroxide, sodium carbonate, potassium carbonate, and sodium hydrogencarbonate, and organic bases, such as pyridine and triethylamine. One of these bases can be used alone or two or more in combination.

The used amount of the base can be appropriately adjusted based on the type of the base. For example, the used amount of monoacidic base, such as sodium hydroxide, is approximately from 1.0 to 3.0 mol per mol of the compound represented by Formula (7) above.

Furthermore, the reaction in step [1-2] can be performed in the presence of a solvent. As the solvent, the same solvent as that used in step [1-1] can be used.

The reaction atmosphere in step [1-2] is not particularly limited as long as it does not inhibit the reaction. For example, a nitrogen atmosphere, an argon atmosphere, or any other atmosphere may be used.

The reaction temperature in step [1-2] is, for example, approximately from 100 to 200°C. The reaction time is, for example, approximately from 1 to 15 hours. In addition, this reaction can be performed by any method, such as a batch method, a semi-batch method, and a continuous method.

After completion of this reaction, the resulting reaction product can be separated and purified by typical precipitation, washing, and filtration.

Furthermore, the compound represented by Formula (2-1) above can also be produced by collectively charging and reacting a compound represented by Formula (4) above, a compound represented by Formula (5) above, and a compound represented by Formula (7) above.

The curable compound product can also be produced by performing a dehydrative imidization reaction between a compound represented by Formula (7) above and a compound represented by Formula (3) above to yield a compound (8) in which an amino group ($-NH_2$) of the compound represented by Formula (7) above has been converted to Formula (r-1) above, and then collectively charging and reacting the compound (8) together with a compound represented by Formula (4) above and a compound represented by Formula (5). However, in this method, even if the compound (8) does not include Formula (r-2) above, the group represented by Formula (r-1) above is opened by the water produced during the reaction to form a group represented by Formula (r-2) above. Therefore, also when the production is performed by this method, it is preferable to perform the reaction while removing the water produced in the reaction system, for example, by azeotropic dehydration, and to stop the reaction after confirming that the reaction has progressed sufficiently, for example, by a method such as sampling to confirm the ring closure rate.

[Curable composition]

The curable composition according to an embodiment of the present disclosure contains one type or two or more types of the curable compound products described above. The content of the curable compound product (in the case where two or more types are contained, the total amount thereof) in the total amount of the curable composition (or the total amount of non-volatile contents of the curable composition) is, for example, 30 wt.% or greater, preferably 50 wt.% or greater, particularly preferably 70 wt.% or greater, and most preferably 90 wt.% or greater. Note that the upper limit is 100 wt.%. That is, the curable composition according to an embodiment of the present disclosure may be formed from the curable compound product alone.

The curable composition may contain another component as necessary in addition to the curable compound product. Examples of such another component include curable compound products other than the curable compound product described above, catalysts, fillers, organic resins (such as silicone resins, epoxy resins, and fluororesins), solvents, stabilizers (such as antioxidants, ultraviolet absorbers, light-resistant stabilizers, and heat stabilizers), flame retardants (such as phosphorus-based flame retardants, halogen-based flame retardants, and inorganic flame retardants), flame retardant aids, reinforcing materials, nucleating agents, coupling agents, lubricants, waxes, plasticizers, release agents, impact resistance modifiers, hue modifiers, fluidity improvers, colorants (such as dyes and pigments), dispersants, antifoaming agents, defoaming agents, antimicrobial agents, preservatives, viscosity modifiers, and thickeners. One type alone or two or more types thereof in combination can be used.

The curable composition may contain a curable compound other than the curable compound product described above; however, the proportion of the curable compound product in the total amount (100 wt.%) of curable compounds contained in the curable composition is, for example, 70 wt.% or greater, preferably 80 wt.% or greater, and particularly preferably 90 wt.% or greater. Note that the upper limit is 100 wt.%.

Since the curable compound product has excellent solvent solubility, the curable composition may be a solvent-dissolved material, in which the curable compound product is dissolved in a solvent. As the solvent, a solvent for which the curable compound product exhibits good solubility (for example, at least one type of solvent selected from ethers, chain ketones, cyclic ketones, amides, halogenated hydrocarbons, and sulfoxides) is preferred, and at least one type of solvent selected from chain ketones, cyclic ketones, amides, and halogenated hydrocarbons is especially preferred.

Furthermore, even when the curable composition does not contain any crosslinking agent or curing accelerator (e.g., the total content of the crosslinking agent and the curing accelerator in the total amount of the curable composition is 3 wt.% or less, and preferably less than 1 wt.%), a cured product can be rapidly formed by heating at a temperature equal to or higher than the initiation temperature of heat generation. Furthermore, because the content of an unreacted curing accelerator and decomposition products thereof can be suppressed to an extremely low level when the total content of the crosslinking agent and the curing accelerator in the curable composition falls within the range described above, outgassing originated from the crosslinking agent and the curing accelerator can be suppressed in the resultant cured product.

Furthermore, by heating the curable composition at a temperature equal to or higher than the initiation temperature of heat generation, the curable composition can rapidly cure to form a cured product having excellent superheat resistance and insulating properties. Note that the heat treatment conditions can be appropriately set in the same range as that for the curing conditions of the curable compound product described above.

The curable composition described above can be suitably used as molding materials for composite materials (such as fiber-reinforced plastics and prepregs) to be used in a severe environmental temperature, such as those for electronic information devices, home appliances, automobiles, precision machines, aircraft, devices for the space industry, and energy field (oil drill pipes/tubes and fuel containers), and as functional materials, such as shielding materials, conducting materials (such as thermally conducting materials), insulating materials, and adhesives (such as heat-resistant adhesives). In addition, the curable composition can be suitably used as sealing agents, paints, inks, sealants, resists, shaping materials, and forming materials [forming materials for, for example, automobile components, such as thrust washers, oil filters, seals, bearings, gears, cylinder head covers, bearing retainers, intake manifolds, and pedals; components of semiconductor and liquid crystal producing apparatuses, such as base materials, electrical insulation materials (such as electrical insulation films), laminated plates, electronic papers, touch panels, solar cell substrates, optical waveguide materials, light guide plates, holographic memories, silicon wafer carriers, IC chip trays, electrolytic capacitor trays, and insulating films; optical components, such as lenses; compressor components, such as pumps, valves, and seals; cabin interior components of aircraft; medical device components and components of food and beverage producing facilities, such as sterilized devices, columns, and piping; and members for electric and electronic devices as represented by housings to be used for personal computers and cell phones, and keyboard supporters being members to support keyboards inside personal computers].

Because the curable composition has the characteristics described above, especially, the curable composition can be suitably used as a sealing agent that covers a semiconductor element in a highly heat-resistant and highly voltage-resistant semiconductor device (such as power semiconductor), for which employment of a known resin material has

been difficult.

Furthermore, because the curable composition has the characteristics described above, the curable composition can be suitably used as an adhesive [e.g., heat-resistant adhesive used for laminating a semiconductor in a highly heat-resistant and highly voltage-resistant semiconductor device (such as power semiconductor)].

Furthermore, because the curable composition has the characteristics described above, the curable composition can be suitably used as a paint (solvent-type coating agent or powder coating agent) [e.g., paint (solvent-type coating agent or powder coating agent) used for a highly heat-resistant and highly voltage-resistant semiconductor device (such as power semiconductor)].

[Molded product]

The molded product according to an embodiment of the present disclosure includes a cured product or semi-cured product of the curable compound product described above. The shape of the molded product is not particularly limited, and may be appropriately selected depending on the application, and the molded product may be planar or three-dimensional. Furthermore, it may be in a pellet form or in a particulate form. The molded product can be produced by subjecting the curable compound product (or the curable composition) to a molding method, such as injection molding, transfer molding, compression molding, or extrusion molding.

The molded product has excellent heat resistance. Therefore, the composite material can be suitably used as a material that can be replaced with a metal, such as iron and aluminum, in the fields of housing and building, sporting goods, automobiles, and aircraft and space industry. In particular, a molded product in a planer form (or a molded product in a film form) can be suitably used as an interlayer insulating film of an electric device.

[Laminate]

The laminate according to an embodiment of the present disclosure has a structure in which a cured product or semi-cured product of the curable compound product and a substrate are laminated. The laminate includes structures that are a cured product or semi-cured product of the curable compound product/substrate and a substrate/cured product or semi-cured product of the curable compound product/substrate.

Examples of the materials of the substrate include semiconductor materials (such as ceramics, SiC, and gallium nitride), paper, coated paper, plastic films, wood, fabric, nonwoven fabric, and metals (such as stainless steel, aluminum alloy, and copper).

The laminate has a configuration in which the substrates are laminated via an adhesive layer containing a cured product or semi-cured product of the curable compound product and having excellent heat resistance and adhesion to the substrate. The laminate can be suitably used as, for example, an electric circuit board.

The laminate can be produced, for example, by placing the curable compound product on a substrate and performing heat treatment.

The laminate can also be produced by applying a molten material of the curable compound product on a support made of plastic, solidifying the applied material, forming a thin film containing the curable compound product, releasing the formed thin film from the support, laminating the formed thin film on a substrate, and performing heat treatment.

[Composite material]

The composite material according to an embodiment of the present disclosure includes a cured product or semi-cured product of the curable compound product and a fiber. The shape of the composite material is not particularly limited, and examples thereof include a fiber form and a sheet form.

Examples of the fiber include carbon fibers, aramid fibers, and glass fibers. One of these solvents can be used alone or two or more in combination. The fiber may be processed into a thread form or a sheet form (woven fabric or nonwoven fabric).

The composite material can be produced by, for example, impregnating fibers with a solution prepared by dissolving the curable compound product in a solvent or impregnating fibers with a molten material of the curable compound product and performing heat treatment. The composite material formed by semi-curing the impregnated curable compound product through the heat treatment can be suitably used as an intermediate product, such as a prepreg.

The composite material has a configuration, in which the curable compound product is incorporated into gaps between fibers and cured therein, and has a light weight and high strength as well as excellent heat resistance. Therefore, the composite material can be suitably used as a material that can be replaced with a metal, such as iron and aluminum, in the fields of housing and building, sporting goods, automobiles, and aircraft and space industry. In addition, the composite material can be suitably used as clothing material for fire fighting (fire fighting clothing, clothing for activity, clothing for rescue and heat resistant clothing); curtains and footcloth; separators, such as separators for secondary

batteries and separators for fuel cells; filters, such as industrial filters, filters for cars, and medical filters; and space materials.

Each of the configurations, combinations thereof, and the like according to the present disclosure are an example, and various additions, omissions, substitutions, and changes may be made as appropriate without departing from the gist of the present disclosure. Further, the present disclosure is not limited by the embodiments and is limited only by the claims.

Examples

Hereinafter, the present disclosure will be described more specifically with reference to examples, but the present disclosure is not limited by these examples.

Note that the measurements were performed under the following conditions.

NMR measurement

Measuring instrument: JEOL ECA 500 or BRUKER AVANCE 600 MHz
Measurement solvent: deuterated DMSO, deuterated chloroform or a liquid mixture of deuterated chloroform/pentafluorophenol (PFP) = 2/1 (wt/wt)
Chemical shift: TMS as the reference

GPC measurement

Apparatus: pump "LC-20AD" (available from Shimadzu Corporation)
Detector: RID-10A (available from Shimadzu Corporation) or MODEL 302 TDA (available from Viscotek Corporation) and UV 2501 (available from Viscotek Corporation)
Solvent: THF or chloroform
Column: Shodex KF-803 + Shodex KF802 + Shodex KF801 × 2
Flow rate: 1.0 mL/min
Temperature: 40°C
Sample concentration: 0.1% (wt/vol)

calibrated with polystyrene standards
DSC measurement

Apparatus: TA Instruments Q2000
Rate of temperature increase: 20°C/min
Atmosphere: nitrogen atmosphere

<TGA measurement>

Apparatus: Seiko Instruments TG/DTA 6200
Rate of temperature increase: 20°C/min
Atmosphere: nitrogen atmosphere

Example 1 (Production of compound (1-1) product)

(Step 1-1)

In a reactor provided with an agitator, a nitrogen introducing tube, and Dean-Stark apparatus, 70.00 g of 4,4'-difluorobenzophenone (DFBP), 30.52 g of bisphenol A (BisA), 32.39 g of 4,4'-dihydroxy-3,3',5,5'-tetramethylbiphenyl (TMP), 55.42 g of anhydrous potassium carbonate ($K2CO_3$), 528.5 g of N-methylpyrrolidone (NMP), and 324.0 g of toluene (Tol) were charged and heated while agitated in a nitrogen atmosphere, and the toluene was refluxed at 130 to 140°C for 4 hours. Thereafter, further heating was performed to distill off the toluene at 170 to 180°C. Furthermore, after the agitation was continued for 10 hours at 170 to 180°C, the temperature was lowered to room temperature.

(Step 1-2)

In the reactor containing the reaction product, 12.253 g of 4-aminophenol (4-AP), 15.518 g of anhydrous potassium carbonate ($K2CO_3$), 50.8 g of N-methylpyrrolidone (NMP), and 397.8 g of toluene (Tol) were added and heated again while agitated in a nitrogen atmosphere, and the toluene was refluxed at 130 to 140°C for 3 hours. Thereafter, heating was performed to distill off the toluene at 170 to 180°C, and agitation was further continued for 4 hours while the above temperature was maintained. The mixture was then cooled to room temperature, and the reaction solution was added to 3000 mL of methanol and filtered, and thus a powder-like solid was formed. The powder-like solid was washed repeatedly with methanol and water, and then dried under reduced pressure overnight at 80°C to form a powder-like solid diamine-1 [Diamine-1, a compound represented by the following formula ($Ar^3$ in the formula: a residue obtained by removing two hydroxyl groups from BisA and a residue obtained by removing two hydroxyl groups from TMP)].

[Chem. 24]

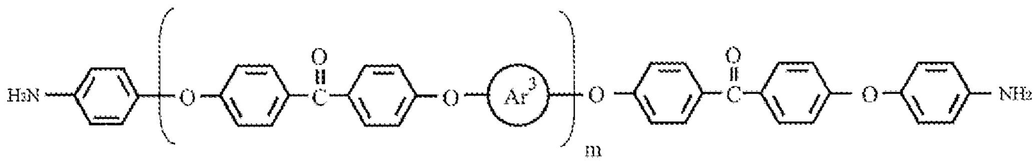

Diamine-1

Step 2

In a reactor provided with an agitator, a nitrogen introducing tube, and Dean-Stark apparatus, 100.00 g of the diamine-1 obtained in step 1, 11.94 g of maleic acid anhydride (MAH), 289.7 g of N-methylpyrrolidone (NMP), and 150.3 g of toluene (Tol) were charged and agitated in a nitrogen atmosphere at room temperature for 5 hours. Thereafter, 1.934 g of p-toluenesulfonic acid (pTSA) was added as the catalyst, and the temperature was increased to 140°C. Agitation was then continued for 8 hours, the toluene was refluxed, and moisture was removed. The reaction solution was brought back to room temperature, and then added to 3000 mL of methanol, and thus a powder-like solid was formed. The powder-like solid was washed repeatedly with methanol and water dried under reduced pressure overnight at 80°C, and thus 101.5 g of a compound product (1-1) below (represented by Formula (1-1), and having a repeating unit in which $Ar^3$ was a residue obtained by removing two hydroxyl groups from BisA and a repeating unit in which $Ar^3$ was a residue obtained by removing two hydroxyl groups from TMP). The properties of the obtained compound product are shown in Table 2 below.

[Chem. 25]

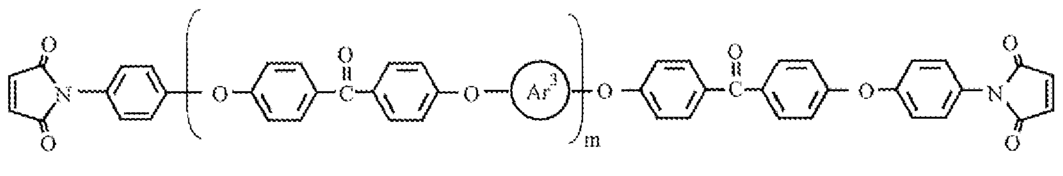

(1-1)

Example 2 (Production of compound (1-2) product)

A compound product (1-2) (represented by Formula (1-1) above, and having a repeating unit in which $Ar^3$ was a residue obtained by removing two hydroxyl groups from BisA, and a repeating unit in which $Ar^3$ was a residue obtained by removing two hydroxyl groups from DAQ) was formed in the same manner except that the conditions were changed as shown in Table 1 below. The properties of the obtained compound product are shown in Table 2 below.

Example 3 (Production of compound (1-3) product)

A compound product (1-3) (represented by Formula (1-1) above, and having a repeating unit in which $Ar^3$ was

a residue obtained by removing two hydroxyl groups from BisA, and a repeating unit in which $Ar^3$ was a residue obtained by removing two hydroxyl groups from DBQ) was formed in the same manner except that the conditions were changed as shown in Table 1 below. The properties of the obtained compound product are shown in Table 2 below.

Example 4 (Production of compound (1-4) product)

A compound (1-4) product (represented by Formula (1-1) above, and having a repeating unit in which $Ar^3$ was a residue obtained by removing two hydroxyl groups from BisAF) was formed in the same manner except that the conditions were changed as shown in Table 1 below. The properties of the obtained compound product are shown in Table 2 below.

Example 5 (Production of compound (1-5) product)

A compound (1-5) product (represented by Formula (1-1) above, and having a repeating unit in which $Ar^3$ was a residue obtained by removing two hydroxyl groups from BisAF, and a repeating unit in which $Ar^3$ was a residue obtained by removing two hydroxyl groups from TMP) was formed in the same manner except that the conditions were changed as shown in Table 1 below. The properties of the obtained compound product are shown in Table 2 below.

Example 6 (Production of compound (1-6) product)

A compound (1-6) product (represented by Formula (1-1) above, and having a repeating unit in which $Ar^3$ was a residue obtained by removing two hydroxyl groups from BisAF, and a repeating unit in which $Ar^3$ was a residue obtained by removing two hydroxyl groups from DAQ) was formed in the same manner except that the conditions were changed as shown in Table 1 below. The properties of the obtained compound product are shown in Table 2 below.

Comparative Example 1 (Production of compound (1-7) product)

A compound (1-7) product (represented by Formula (1-1) above, and having a repeating unit in which $Ar^3$ was a residue obtained by removing two hydroxyl groups from BisA) was formed in the same manner except that the conditions were changed as shown in Table 1 below. The properties of the obtained compound product are shown in Table 2 below.

Comparative Example 2 (Production of compound (1-8) product)

A compound (1-8) product (represented by Formula (1-1) above, and having a repeating unit in which $Ar^3$ was a residue obtained by removing two hydroxyl groups from BisA) was formed in the same manner except that the conditions were changed as shown in Table 1 below. The properties of the obtained compound product are shown in Table 2 below.

Comparative Example 3 (Production of compound (1-9) product)

A compound (1-9) product (represented by Formula (1-1) above, and having a repeating unit in which $Ar^3$ was a residue obtained by removing two hydroxyl groups from BisA) was formed in the same manner except that the conditions were changed as shown in Table 1 below. The properties of the obtained compound product are shown in Table 2 below.

[Table 1]

Table 1

| | Compound product | Step 1-1 | | | | | | | | | Step 1-2 | | | | Step 2 | | | | |
|---|---|---|---|---|---|---|---|---|---|---|---|---|---|---|---|---|---|---|---|
| | | Compound (4) | | Compound (5) | | | | $K_2CO_3$ | NMP | Tol | 4-AP | $K_2CO_3$ | NMP | Tol | Diamine | MAH | NMP | Tol | pTSA |
| | | Type | g | Type | g | Type | g | g | g | g | g | g | g | g | g | g | g | g | g |
| Example 1 | 1-1 | DFBP | 70.00 | BisA | 30.52 | TMP | 32.39 | 55.42 | 528.5 | 324.0 | 12.253 | 15.518 | 50.8 | 397.8 | 100.00 | 11.94 | 289.7 | 150.3 | 1.934 |
| Example 2 | 1-2 | DFBP | 70.00 | BisA | 30.52 | DAQ | 33.47 | 55.42 | 533.3 | 326.9 | 12.253 | 15.518 | 50.8 | 397.8 | 100.00 | 11.84 | 289.2 | 150.1 | 1.932 |
| Example 3 | 1-3 | DFBP | 70.00 | BisA | 30.52 | DBQ | 29.72 | 55.42 | 516.8 | 316.8 | 12.253 | 15.518 | 50.8 | 397.8 | 100.00 | 12.19 | 290.9 | 150.9 | 1.942 |
| Example 4 | 1-4 | DFBP | 70.00 | BisAF | 89.89 | - | 0.00 | 55.42 | 634.5 | 388.9 | 12.253 | 15.518 | 50.8 | 397.8 | 133.58 | 13.24 | 380.7 | 197.5 | 2.130 |
| Example 5 | 1-5 | DFBP | 70.00 | BisAF | 44.94 | TMP | 32.39 | 55.42 | 584.7 | 358.4 | 12.253 | 15.518 | 50.8 | 397.8 | 109.35 | 11.77 | 314.1 | 163.0 | 1.870 |
| Example 6 | 1-6 | DFBP | 70.00 | BisAF | 44.94 | DAQ | 33.47 | 55.42 | 588.9 | 361.0 | 12.253 | 15.518 | 50.8 | 397.8 | 110.15 | 11.77 | 316.2 | 164.0 | 1.750 |
| Comparative Example 1 | 1-7 | DFBP | 37.25 | BisA | 32.48 | - | 0.00 | 29.50 | 214.4 | 90.4 | 6.520 | 8.260 | 27.9 | 117.4 | 49.70 | 6.03 | 316.0 | 178.3 | 1.086 |
| Comparative Example 2 | 1-8 | DFBP | 45.50 | BisA | 43.20 | - | 0.00 | 39.26 | 252.5 | 106.5 | 4.550 | 5.741 | 37.1 | 156.1 | 50.69 | 4.46 | 199.5 | 73.2 | 0.760 |
| Comparative Example 3 | 1-9 | DFBP | 27.50 | BisA | 23.98 | - | 0.00 | 21.77 | 225.9 | 95.4 | 5.040 | 6.390 | 30.8 | 130.1 | 48.57 | 5.88 | 390.3 | 173.4 | 0.761 |

Abbreviations in Table 1 are described below:
TMP: 4,4'-dihydroxy-3,3',5,5'-tetramethylbiphenyl
DAQ: 2,5-di-t-pentyl hydroquinone
DBQ: 2,5-di-t-butylhydroquinone
BisAF: 4,4'-bis(trifluoromethyl)methylenebisphenol

For the compound products obtained in the Examples and the Comparative Examples, the functional group concentration, the unclosed ring concentration, and the ring closure rate were calculated from the integrated intensity ratio of the signal in the $^1$H-NMR spectrum. Furthermore, the number average molecular weight and weight average molecular weight were determined by GPC measurement. Furthermore, Tg and calorific value were determined by DSC measurement, and the 5% thermal weight loss temperature ($T_{d5}$) was determined by TGA measurement.

$^1$H-NMR measurement results of the compound products (1-2), (1-3), (1-4), (1-6), and (1-9) are illustrated in FIGS. 1 to 5.

DSC measurement results of the compound products (1-1), (1-2), (1-3), and (1-7) obtained in the Examples are illustrated in FIG. 6.

The storage stability in solution of each of the obtained compound products was evaluated by the following method.

Each of the compound products was dried under reduced pressure at 80°C overnight, then brought back to room temperature in dry nitrogen, and used as a sample.

Then, a predetermined amount of the sample was weighed into a vial in which the inside was replaced with dry nitrogen, and NMP (moisture-reduced product) was added to form a 20 wt.% NMP solution.

The resulting 20 wt.% NMP solution was stored in a desiccator (temperature: 23°C) for 10 days, and storage stability was evaluated from the ratio of the pre-storage viscosity ($\eta_0$) to the post-storage viscosity ($\eta_{10}$). Note that the viscosity was measured using an E-type viscometer at 23°C.

The solvent solubility of each of the obtained compound products was evaluated by the following method.

Each of the compound products (0.1 g) was mixed with N-methyl-2-pyrrolidone (NMP) or chloroform (10 g), and agitated at room temperature (23°C) for 24 hours to evaluate the solvent solubility. As a result, all of the compound products were completely dissolved. Their solvent solubility was good.

The results are summarized as shown in Table 2 below:

[Table 2]

Table 2

| | Compound product | Functional group concentration | Ring closure rate | Unclosed ring concentration | Molecular weight | | Solubility | | Tg | Calorific value | $T_{d5}$ | Pre-storage viscosity ($\eta_0$) | Pre-storage/ post-storage viscosity ratio ($\eta_{10}/\eta_0$) |
|---|---|---|---|---|---|---|---|---|---|---|---|---|---|
| | | μmol/g | % | μmol/g | Mn | Mw | NMP | $CHCl_3$ | °C | J/g | °C | mPa·s | |
| Example 1 | 1-1 | 548.7 | 99.95 | 0.27 | 2,610 | 4,260 | Good | Good | 128 | 23 | 475 | 18.0 | 1.0 |
| Example 2 | 1-2 | 478.4 | 99.60 | 1.91 | 3,350 | 6,170 | Good | Good | 128 | 34 | 484 | 23.9 | 1.1 |
| Example 3 | 1-3 | 537.5 | 99.92 | 0.42 | 3,430 | 5,830 | Good | Good | 132 | 39 | 497 | 23.5 | 1.0 |
| Example 4 | 1-4 | 375.8 | 99.98 | 0.08 | 4,540 | 7,010 | Good | Good | 145 | 39 | 522 | 29.8 | 1.0 |
| Example 5 | 1-5 | 478.8 | 99.97 | 0.13 | 3,220 | 5,400 | Good | Good | 160 | 23 | 479 | 22.8 | 1.0 |
| Example 6 | 1-6 | 424.4 | 100.00 | 0.00 | 3,940 | 6,100 | Good | Good | 146 | 46 | 485 | 24.1 | 1.0 |
| Comparative Example 1 | 1-7 | 552.3 | 99.57 | 2.39 | 3,800 | 7,600 | Good | Good | 131 | 40 | 514 | 29.3 | 1.0 |
| Comparative Example 2 | 1-8 | 331.2 | 99.18 | 2.75 | 5,680 | 17,550 | Good | Good | 140 | 17 | 522 | 67.2 | 1.1 |
| Comparative Example 3 | 1-9 | 503.5 | 96.22 | 19.76 | 4,160 | 8,510 | Good | Good | 124 | 36 | 505 | 29.7 | 3.2 |

[Melt press molding]

A mold was filled with each of the compound products obtained in the Examples and the Comparative Examples, set in a press machine (30-ton manual hydraulic vacuum press, IMC-462-3 type, available from Imoto Machinery Co., Ltd.). The temperature was increased from 50°C to 280°C at 20°C/min in a vacuum, and maintained at the temperature for 1 hour. Then, the temperature was further increased to 320°C at 20°C/min and maintained for 30 minutes. Thereafter, the mold was taken out when the press machine was cooled to 100°C or lower, and a flat plate-shaped molded body (thickness: 1 mm) formed from a cured product of each of the compound products was obtained.
The Tg of the obtained molded body was determined by DSC measurement.
The relative permittivity and the dielectric loss tangent of the obtained molded body were measured by the method described below.

Measurement method

A test specimen having a width of 1.5 mm was prepared by cutting the molded body, and the relative permittivity and the dielectric loss tangent were measured by the cavity resonator perturbation method (in conformity with ASTM D2520). The measurement was performed at a frequency of 10 GHz.
The results are summarized as shown in Table 3 below:

[Table 3]

Table 3

| | Compound product | Tg | Insulating properties | |
|---|---|---|---|---|
| | | °C | Relative permittivity | Dielectric loss tangent |
| Example 1 | 1-1 | 186 | 2.52 | 0.0041 |
| Example 2 | 1-2 | 171 | 2.26 | 0.0032 |
| Example 3 | 1-3 | 192 | 2.27 | 0.0043 |
| Example 4 | 1-4 | 183 | 2.39 | 0.0042 |
| Example 5 | 1-5 | 207 | 2.46 | 0.0044 |
| Example 6 | 1-6 | 173 | 2.27 | 0.0027 |
| Comparative Example 1 | 1-7 | 172 | 2.60 | 0.0048 |
| Comparative Example 2 | 1-8 | 167 | 2.76 | 0.0044 |
| Comparative Example 3 | 1-9 | 173 | 2.60 | 0.0049 |

Industrial Applicability

The curable compound product of the present disclosure has excellent moldability, and a solution obtained by dissolving the curable compound product in a solvent has high storage stability. Furthermore, when the curable compound product is subjected to heat treatment at a temperature equal to or higher than the initiation temperature of heat generation, a cured product having excellent heat resistance and high insulating properties can be obtained.
Therefore, the curable compound product can be suitably used in an adhesive, a sealing agent, a paint, or the like in a field where superheat resistance is required.

## Claims

**1.** A curable compound product comprising a compound represented by Formula (1):

[Chem. 1]

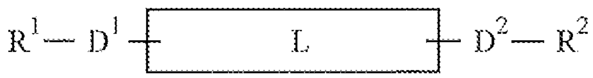

(I)

where $R^1$ and $R^2$ are identical or different, and each represent a group represented by Formula (r-1) or a group represented by Formula (r-2):

[Chem. 2]

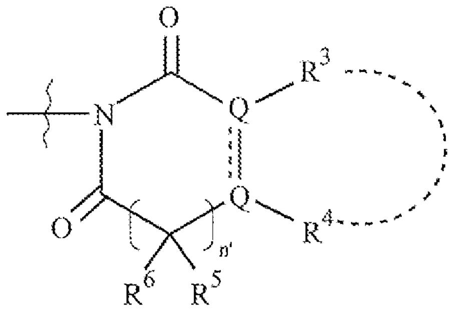

(r-1)

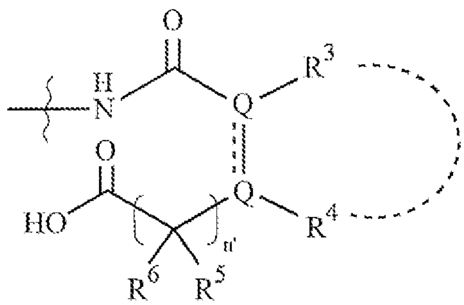

(r-2)

where Q represents C or CH, and two Q's in Formula (r-1) and Formula (r-2) bond to each other through a single bond or a double bond;
$R^3$ to $R^6$ are identical or different, and each represent a hydrogen atom or a hydrocarbon group;
$R^3$ and $R^4$ may bond to each other to form a ring;
n' represents an integer of 0 or greater; and
a bond with a wavy line is bonded to $D^1$ or $D^2$,
where $D^1$ and $D^2$ are identical or different, and each represent a single bond or a linking group; and
L represents a divalent group having a repeating unit containing a structure represented by Formula (I) and a structure represented by Formula (II):

[Chem. 3]

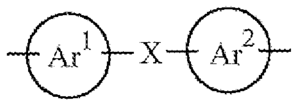

(I)

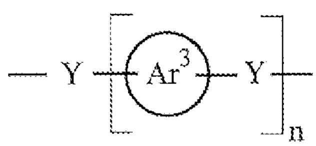

(II)

where $Ar^1$ to $Ar^3$ are identical or different, and each represent a group in which two hydrogen atoms are removed from an aromatic ring structure or a group in which two hydrogen atoms are removed from a structure in which

two or more aromatic rings are bonded through a single bond or a linking group;
the aromatic rings may have an alkyl group;
X represents -CO-, -S-, or $-SO_2-$;
Y is identical or different, and each represents -S-, $-SO_2-$, -O-, -CO-, -COO-, or -CONH-; and
n represents an integer of 0 or greater,
provided that at least one of all $Ar^1$ to $Ar^3$ contained in L is a group in which two hydrogen atoms are removed from an aromatic ring structure having an alkyl group, and/or at least one of all $Ar^1$ to $Ar^3$ contained in L is a group in which two hydrogen atoms are removed from a structure in which two or more aromatic rings are bonded through a halogenated alkylene group,
wherein a proportion of the group represented by Formula (r-1) to a sum of the group represented by Formula (r-1) and the group represented by Formula (r-2) is 97% or greater.

2. The curable compound product according to claim 1, wherein $D^1$ and $D^2$ in Formula (1) are identical or different, and each represent a group selected from groups having structures represented by Formulas (d-1) to (d-4):

[Chem. 4]

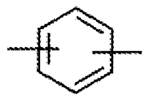
(d-1)

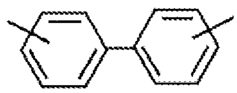
(d-2)

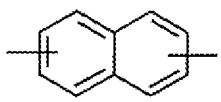
(d-3)

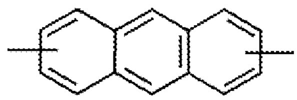
(d-4)

3. The curable compound product according to claim 1 or 2, wherein a viscosity ($\eta_0$) of a 20 wt.% NMP solution obtained by subjecting the curable compound product to a reduced-pressure drying process and then dissolving the reduced-pressure-dried curable compound product in NMP, and a viscosity ($\eta_{10}$) of the 20 wt.% NMP solution after being left to stand for 10 days in a desiccator maintained at 23°C satisfy Formula

$$\eta_{10}/\eta_0 < 2 \qquad (F);$$

wherein the viscosity is measured using an E-type viscometer.

4. The curable compound product according to any one of claims 1 to 3, having a weight average molecular weight from 1000 to 10000 determined by gel permeation chromatography with chloroform as solvent and calibrated with polystyrene standards.

5. The curable compound product according to any one of claims 1 to 4, having a glass transition temperature from 80 to 230°C, determined by differential scanning calorimetry. .

6. A molded product comprising a cured product or semi-cured product of the curable compound product described in any one of claims 1 to 5.

7. A laminate having a configuration in which a cured product or semi-cured product of the curable compound product described in any one of claims 1 to 5 and a substrate are laminated.

**8.** A method of producing a laminate, the method comprising placing the curable compound product described in any one of claims 1 to 5 on a substrate and performing heat treatment to form a laminate having a configuration in which a cured product or semi-cured product of the curable compound product and the substrate are laminated.

**9.** The method of producing a laminate according to claim 8, the method comprising applying a molten material of the curable compound product on a support made of plastic, solidifying the applied material, forming a thin film containing the curable compound product, releasing the formed thin film from the support, laminating the formed thin film on a substrate, and performing heat treatment.

**10.** A composite material comprising a cured product or semi-cured product of the curable compound product described in any one of claims 1 to 5 and a fiber.

**11.** An adhesive comprising the curable compound product described in any one of claims 1 to 5.

**12.** A paint comprising the curable compound product described in any one of claims 1 to 5.

**13.** A sealing agent comprising the curable compound product described in any one of claims 1 to 5.

**Patentansprüche**

**1.** Härtbares Verbundprodukt, umfassend eine Verbindung, dargestellt durch Formel (1):

[Chem. 1]

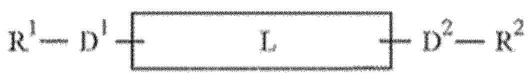

(1)

wobei $R^1$ und $R^2$ identisch oder verschieden sind und jeweils eine Gruppe, dargestellt durch Formel (r-1), oder eine Gruppe, dargestellt durch Formel (r-2), sind:

[Chem. 2]

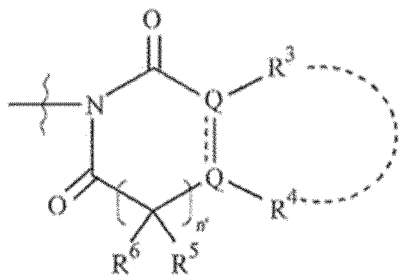

(r-1)

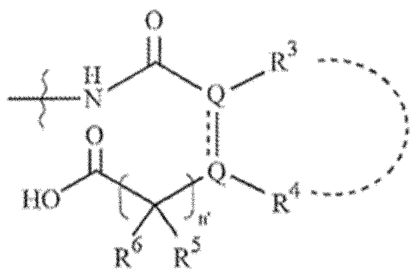

(r-2)

wobei Q C oder CH ist und zwei Q in Formel (r-1) und Formel (r-2) über eine Einfachbindung oder eine Doppelbindung miteinander verbunden sind;
$R^3$ bis $R^6$ identisch oder verschieden sind und jeweils ein Wasserstoffatom oder eine Kohlenwasserstoffgruppe

sind;
$R^3$ und $R^4$ aneinander binden können, um einen Ring zu bilden;
n' eine ganze Zahl von 0 oder größer ist und
eine Bindung mit einer Wellenlinie an $D^1$ oder $D^2$ gebunden ist,
wobei $D^1$ und $D^2$ identisch oder verschieden sind und jeweils eine Einfachbindung oder eine Verbindungsgruppe sind und
L eine zweiwertige Gruppe mit einer Wiederholungseinheit ist, die eine durch Formel (I) dargestellte Struktur und eine durch Formel (II) dargestellte Struktur enthält:

[Chem. 3]

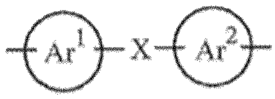
(I)

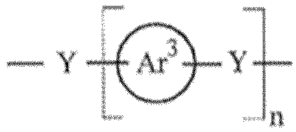
(II)

wobei $Ar^1$ bis $Ar^2$ identisch oder verschieden sind und jeweils eine Gruppe sind, bei der zwei Wasserstoffatome aus einer aromatischen Ringstruktur entfernt sind, oder eine Gruppe, bei der zwei Wasserstoffatome aus einer Struktur entfernt sind, in der zwei oder mehr aromatische Ringe durch eine Einfachbindung oder eine Verbindungsgruppe verbunden sind;
die aromatischen Ringe eine Alkylgruppe aufweisen können;
X -CO-, -S- oder $-SO_2-$ ist;
Y identisch oder verschieden ist und jeweils -S-, $-SO_2-$, -O-, -CO-, -COO- oder -CONH- ist und
n eine ganze Zahl von 0 oder größer ist,
vorausgesetzt, dass mindestens eines von allen in L enthaltenen $Ar^1$ bis $Ar^3$ eine Gruppe ist, bei der zwei Wasserstoffatome aus einer aromatischen Ringstruktur mit einer Alkylgruppe entfernt sind, und/oder mindestens eines von allen in L enthaltenen $Ar^1$ bis $Ar^3$ eine Gruppe ist, bei der zwei Wasserstoffatome aus einer Struktur entfernt sind, in der zwei oder mehr aromatische Ringe durch eine halogenierte Alkylengruppe verbunden sind, wobei ein Anteil der durch Formel (r-1) dargestellten Gruppe bezogen auf eine Summe der durch Formel (r-1) dargestellten Gruppe und der durch Formel (r-2) dargestellten Gruppe 97 % oder mehr beträgt.

2. Härtbares Verbundprodukt gemäß Anspruch 1, wobei $D^1$ und $D^2$ in Formel (1) identisch oder verschieden sind und jeweils eine Gruppe sind, ausgewählt aus Gruppen mit Strukturen, die durch die Formeln (d-1) bis (d-4) dargestellt sind:

[Chem. 4]

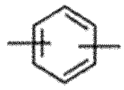

(d-1)

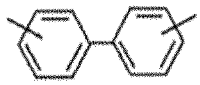

(d-2)

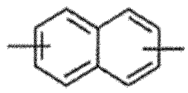

(d-3)

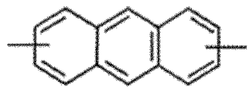

(d-4)

**3.** Härtbares Verbundprodukt gemäß Anspruch 1 oder 2, wobei eine Viskosität ($\eta_0$) einer NMP-Lösung mit 20 Gew.-%, die gewonnen wird, indem das härtbare Verbundprodukts einem Trocknungsverfahren unter vermindertem Druck und anschließendem Auflösen des unter vermindertem Druck getrockneten härtbaren Verbundprodukts in NMP unterzogen wird, und eine Viskosität ($\eta_{10}$) der NMP-Lösung mit 20 Gew.-% nach 10-tägigem Stehenlassen in einem Exsikkator bei 23 °C die Formel

$$\eta_{10}/\eta_0 < 2 \qquad (F)$$

erfüllt, wobei die Viskosität unter Verwendung eines Viskosimeters vom Typ E gemessen wird.

**4.** Härtbares Verbundprodukt gemäß einem der Ansprüche 1 bis 3 mit einem gewichtsgemittelten Molekulargewicht von 1000 bis 10000, bestimmt durch Gelpermeationschromatographie mit Chloroform als Lösungsmittel und kalibriert mit Polystyrol-Standards.

**5.** Härtbares Verbundprodukt gemäß einem der Ansprüche 1 bis 4 mit einer Glasübergangstemperatur von 80 bis 230 °C, bestimmt durch dynamische Differenzkalorimetrie.

**6.** Formprodukt, umfassend ein gehärtetes Produkt oder halbgehärtetes Produkt aus dem in einem der Ansprüche 1 bis 5 beschriebenen härtbaren Verbundprodukt.

**7.** Laminat mit einer Konfiguration, in der ein gehärtetes Produkt oder halbgehärtetes Produkt aus dem in einem der Ansprüche 1 bis 5 beschriebenen härtbaren Verbundprodukt und ein Substrat laminiert sind.

**8.** Verfahren zum Herstellen eines Laminats, wobei das Verfahren das Aufbringen des in einem der Ansprüche 1 bis 5 beschriebenen härtbaren Verbundprodukts auf ein Substrat und das Durchführen einer Wärmebehandlung umfasst, um ein Laminat mit einer Konfiguration zu bilden, in der ein gehärtetes Produkt oder halbgehärtetes Produkt aus dem härtbaren Verbundprodukt und das Substrat laminiert sind.

**9.** Verfahren zum Herstellen eines Laminats gemäß Anspruch 8, wobei das Verfahren das Auftragen eines geschmolzenen Materials aus dem härtbaren Verbundprodukt auf einen Träger aus Kunststoff, das Verfestigen des aufgetragenen Materials, das Bilden eines dünnen Films, der das härtbare Verbundprodukt enthält, das Ablösen des gebildeten dünnen Films von dem Träger, das Laminieren des gebildeten dünnen Films auf ein Substrat und das Durchführen einer Wärmebehandlung umfasst.

**10.** Verbundmaterial, umfassend ein gehärtetes Produkt oder halbgehärtetes Produkt aus dem in einem der Ansprüche 1 bis 5 beschriebenen härtbaren Verbundprodukt und eine Faser.

**11.** Klebstoff, umfassend das in einem der Ansprüche 1 bis 5 beschriebene härtbare Verbundprodukt.

**12.** Farbe, welche das in einem der Ansprüche 1 bis 5 beschriebene härtbare Verbundprodukt umfasst.

**13.** Dichtungsmittel, welches das in einem der Ansprüche 1 bis 5 beschriebene härtbare Verbundprodukt umfasst.

**Revendications**

**1.** Produit de composé durcissable, comprenant un composé représenté par la Formule (1) :

[Chem. 1]

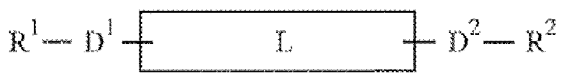

(I)

où $R^1$ et $R^2$ sont identiques ou différents, et chacun représente un groupe représenté par la Formule (r-1) ou un groupe représenté par la Formule (r-2) :

[Chem. 2]

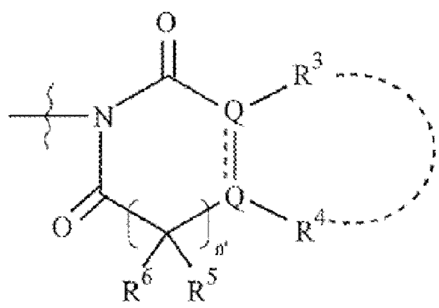

(r-1)

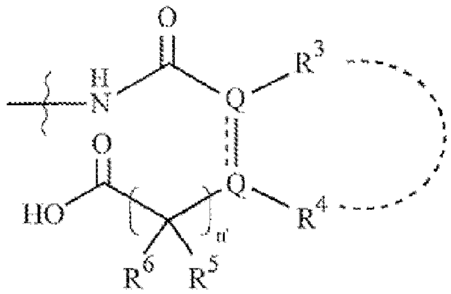

(r-2)

où Q représente C ou CH, et deux Q dans la Formule (r-1) et la Formule (r-2) sont liés l'un à l'autre par l'intermédiaire d'une liaison simple ou d'une double liaison ;
$R^3$ à $R^6$ sont identiques ou différents, et chacun représente un atome d'hydrogène ou un groupe hydrocarboné ;
$R^3$ et $R^4$ peuvent être liés l'un à l'autre pour former un cycle ;
n' représente un entier valant 0 ou plus ; et
une liaison avec un trait ondulé est liée à $D^1$ ou à $D^2$,
où $D^1$ et $D^2$ sont identiques ou différents, et chacun représente une liaison simple ou un groupe liant ; et
L représente un groupe divalent comportant un motif répétitif contenant une structure représentée par la Formule (I) et une structure représentée par la Formule (II) :

[Chem. 3]

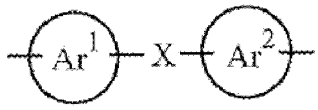

(I)

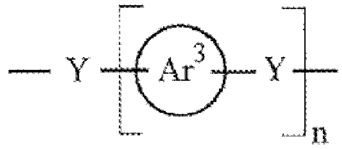

(II)

où $Ar^1$ à $Ar^3$ sont identiques ou différents, et chacun représente un groupe dans lequel deux atomes d'hydrogène sont retirés d'une structure cyclique aromatique ou un groupe dans lequel deux atomes d'hydrogène sont retirés d'une structure dans laquelle deux cycles aromatiques ou plus sont liés par l'intermédiaire d'une liaison simple ou d'un groupe liant ;
les cycles aromatiques peuvent comporter un groupe alkyle ;
X représente -CO-, -S-, ou $-SO_2-$ ;
Y est identique ou différent, et chacun représente -S-, -SO2-, -O-, -CO-, -COO-, ou -CONH- ; et
n représente un entier valant ou plus,
à condition qu'au moins un de tous les $Ar^1$ à $Ar^3$ contenus dans L soit un groupe dans lequel deux atomes d'hydrogène sont retirés d'une structure cyclique aromatique comportant un groupe alkyle, et/ou qu'au moins un de tous les $Ar^1$ à $Ar^3$ contenus dans L soit un groupe dans lequel deux atomes d'hydrogène sont retirés d'une structure dans laquelle deux cycles aromatiques ou plus sont liés par l'intermédiaire d'un groupe alkylène halogéné,
dans lequel une proportion du groupe représenté par la Formule (r-1) par rapport à une somme du groupe représenté par la Formule (r-1) et du groupe représenté par la Formule (r-2) est de 97 % ou plus.

2. Produit de composé durcissable selon la revendication 1, dans lequel $D^1$ et $D^2$ dans la Formule (1) sont identiques ou différents, et chacun représente un groupe choisi parmi les groupes ayant des structures représentées par les Formules (d-1) à (d-4) :

[Chem. 4]

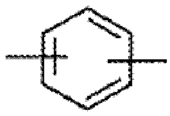

(d-1)

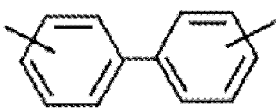

(d-2)

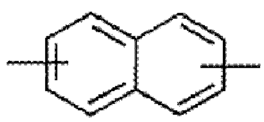

(d-3)

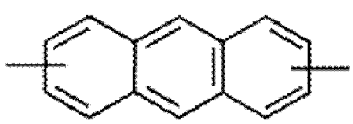

(d-4)

.

3. Produit de composé durcissable selon la revendication 1 ou 2, dans lequel une viscosité ($\eta_0$) d'une solution à 20 % en poids dans la NMP obtenue en soumettant le produit de composé durcissable à un procédé de séchage sous pression réduite puis en dissolvant le produit de composé durcissable séché sous pression réduite dans de la NMP,

et une viscosité ($\eta_{10}$) de la solution à 20 % en poids dans la NMP après que ladite solution a été laissée au repos pendant 10 jours dans un dessicateur maintenu à 23 °C satisfont la Formule

$$\eta_{10}/\eta_0 < 2 \qquad (F),$$

dans laquelle la viscosité est mesurée à l'aide d'un viscosimètre de type E.

**4.** Produit de composé durcissable selon l'une quelconque des revendications 1 à 3, présentant une masse moléculaire moyenne en poids de 1000 à 10 000 déterminée par chromatographie par perméation de gel avec du chloroforme en tant que solvant et calibrée avec des étalons de polystyrène.

**5.** Produit de composé durcissable selon l'une quelconque des revendications 1 à 4, présentant une température de transition vitreuse de 80 à 230 °C, déterminée par analyse calorimétrique différentielle à balayage.

**6.** Produit moulé comprenant un produit durci ou produit semi-durci du produit de composé durcissable décrit dans l'une quelconque des revendications 1 à 5.

**7.** Stratifié ayant une configuration dans laquelle un produit durci ou produit semi-durci du produit de composé durcissable décrit dans l'une quelconque des revendications 1 à 5 et un substrat sont stratifiés.

**8.** Procédé de production d'un stratifié, le procédé comprenant la mise en place du produit de composé durcissable décrit dans l'une quelconque des revendications 1 à 5 sur un substrat et la réalisation d'un traitement thermique pour former un stratifié ayant une configuration dans laquelle un produit durci ou produit semi-durci du produit de composé durcissable et le substrat sont stratifiés.

**9.** Procédé de production d'un stratifié selon la revendication 8, le procédé comprenant l'application d'une matière fondue du produit de composé durcissable sur un support fait de plastique, la solidification de la matière appliquée, la formation d'un film mince contenant le produit de composé durcissable, le retrait du film mince ainsi formé du support, la stratification sur un substrat du film mince ainsi formé, et la réalisation d'un traitement thermique.

**10.** Matériau composite comprenant un produit durci ou produit semi-durci du produit de composé durcissable décrit dans l'une quelconque des revendications 1 à 5 et une fibre.

**11.** Adhésif comprenant le produit de composé durcissable décrit dans l'une quelconque des revendications 1 à 5.

**12.** Peinture comprenant le produit de composé durcissable décrit dans l'une quelconque des revendications 1 à 5.

**13.** Agent d'étanchéité comprenant le produit de composé durcissable décrit dans l'une quelconque des revendications 1 à 5.

COMPOUND PRODUCT (1-2)

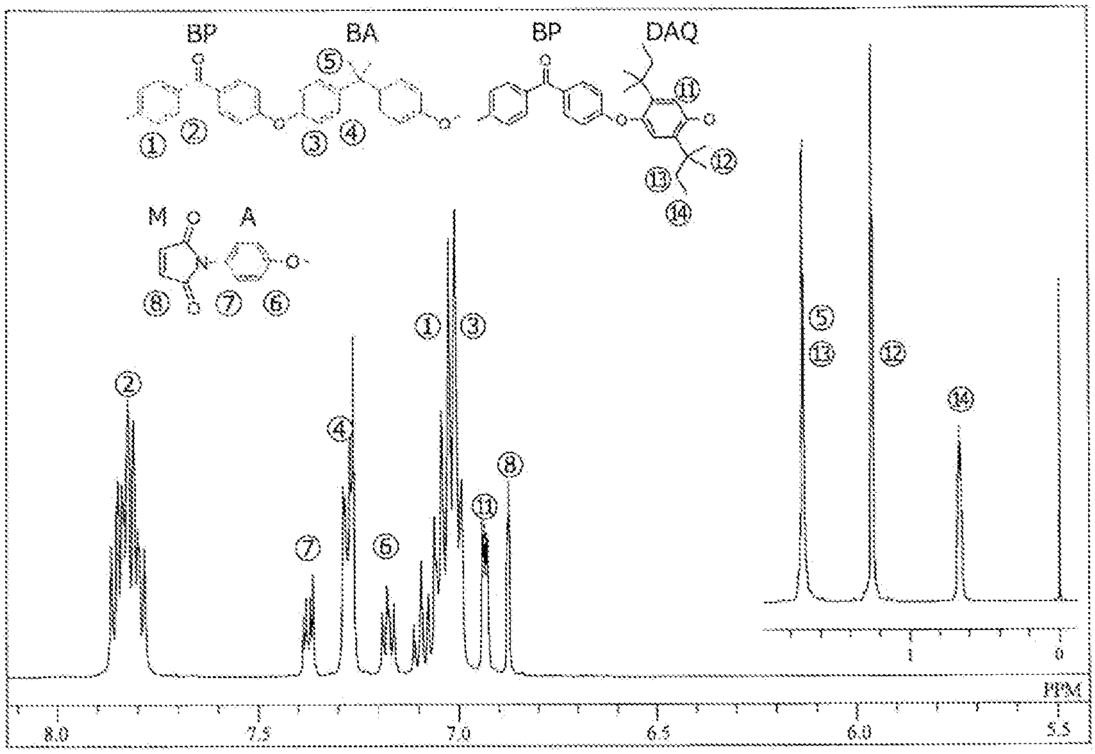


FIG. 1

COMPOUND PRODUCT (1-3)

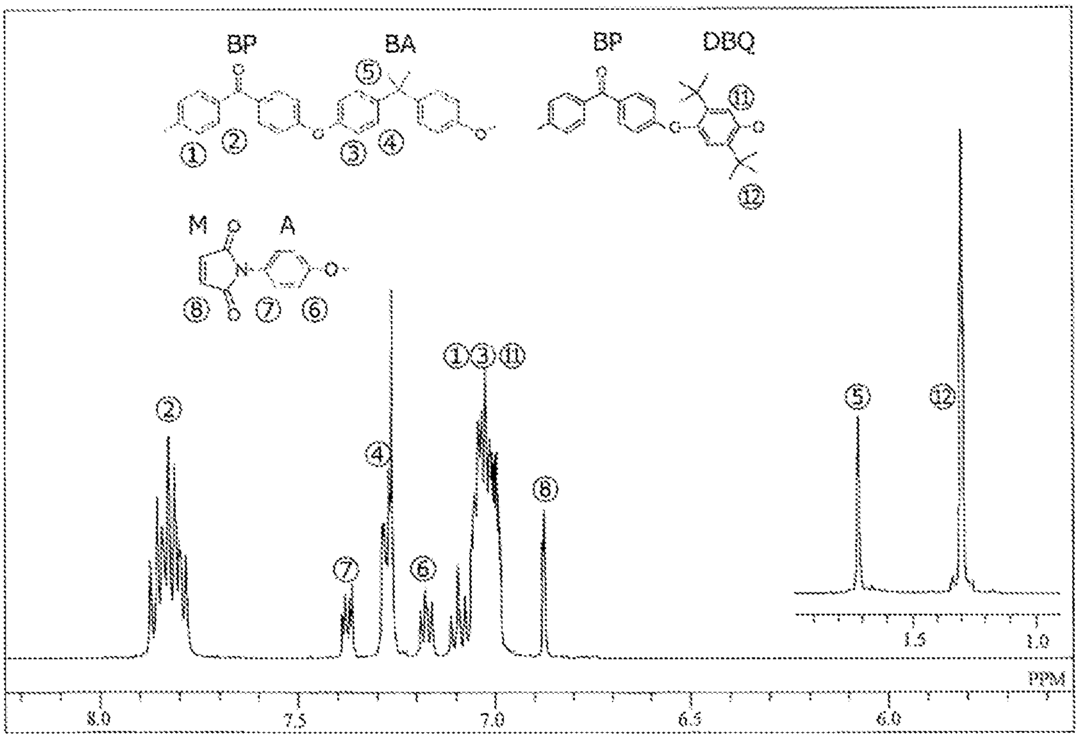


FIG. 2

COMPOUND PRODUCT (1-4)

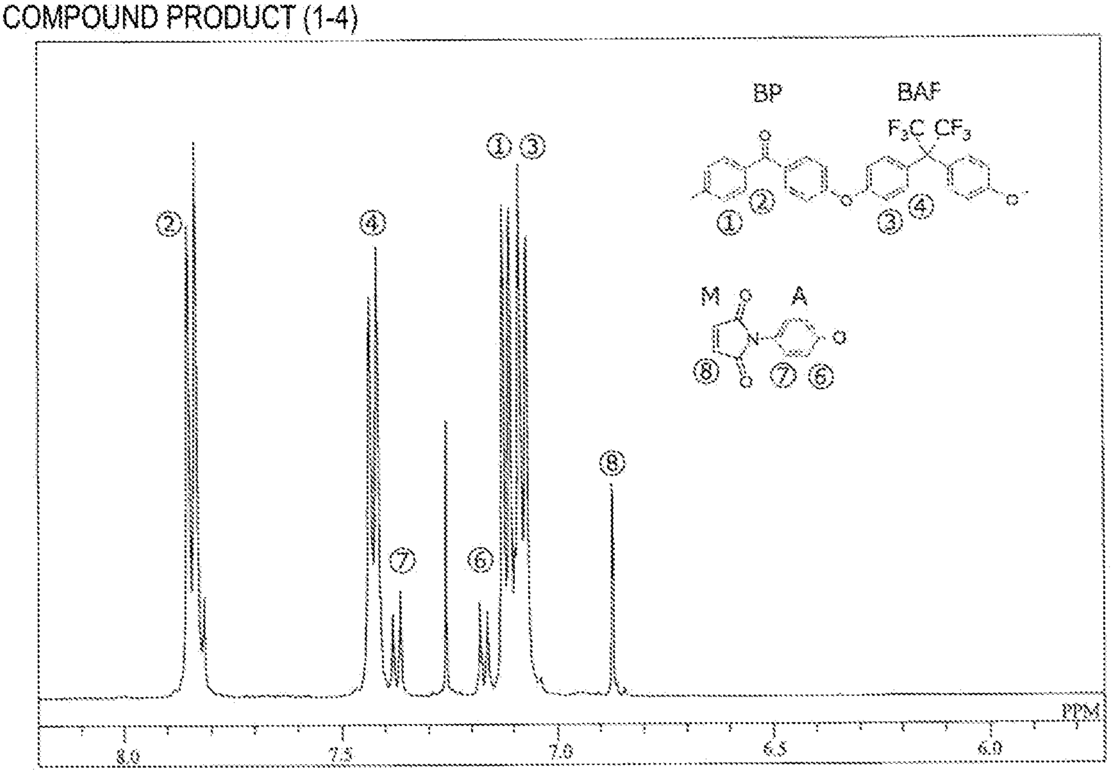


FIG. 3

COMPOUND PRODUCT (1-6)

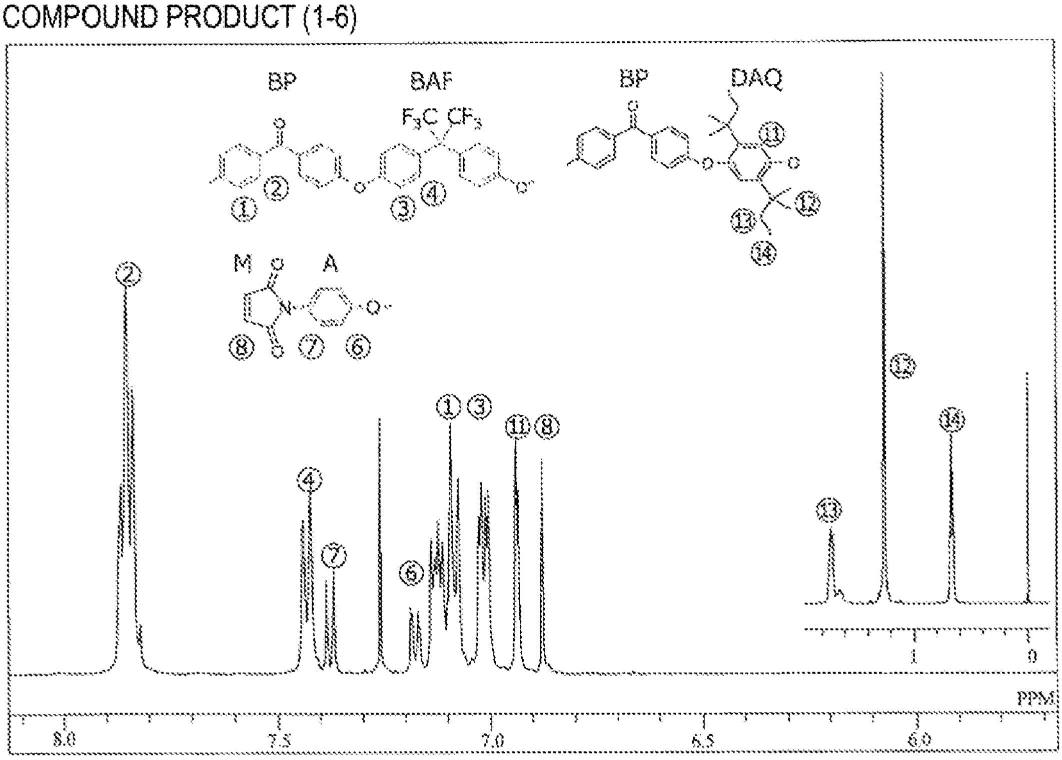


FIG. 4

COMPOUND PRODUCT (1-9)

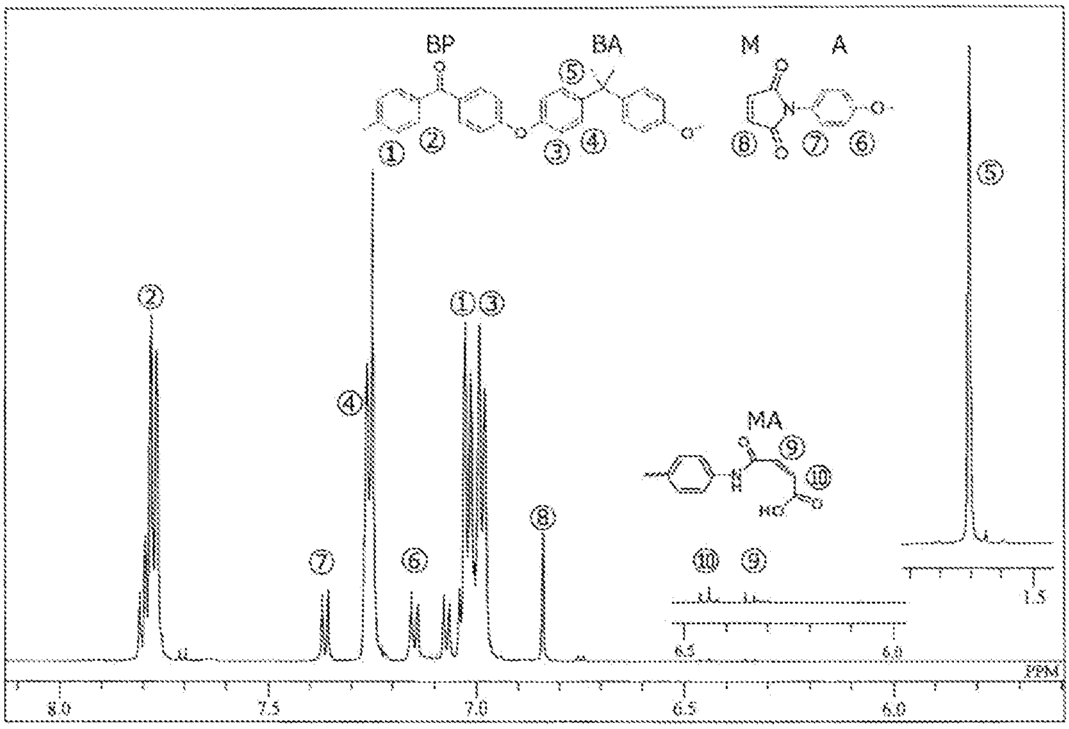


FIG. 5

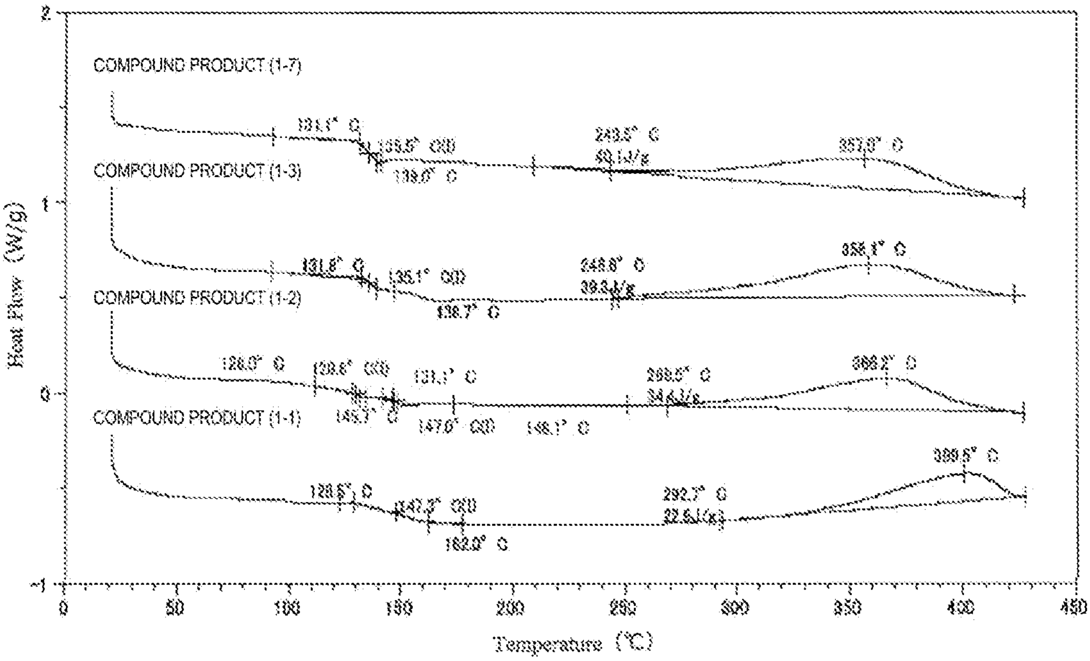
COMPOUND PRODUCT (1-7)
COMPOUND PRODUCT (1-3)
COMPOUND PRODUCT (1-2)
COMPOUND PRODUCT (1-1)
Heat Flow (W/g)
Temperature (℃)
2
1
0
-1
0
50
100
150
200
250
300
350
400
450

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000219741 A
- WO 2019244694 A